# EUROPEAN PATENT APPLICATION

(11) **EP 4 596 773 A1**
(43) Date of publication of application: **06.08.2025**
(21) Application number: 23872458.7
(22) Date of filing: 27.09.2023
(51) Int. Cl.: D04H 3/011, A23F 5/24, B32B 27/12, B65D 77/20, D04H 3/16

(54) **METHOD FOR PRODUCING NON-WOVEN FABRIC AND MELT-BLOWN NON-WOVEN FABRIC, HOT-MELTED BODY AND METHOD FOR PRODUCING SAME, COFFEE FILTER, AND COFFEE CAPSULE**

(30) Priority: 28.09.2022 JP 2022155030; 28.09.2022 JP 2022155031
(71) Applicant: Kaneka Corporation, Osaka-shi, Osaka 530-8288 (JP)
(72) Inventor: MIYAMOTO, Takayuki, Osaka 566-0072 (JP); SHIMAMOTO, Hitoshi, Osaka 566-0072 (JP); MAEDA, Takekazu, Osaka 566-0072 (JP); TAMURA, Masanobu, Osaka 566-0072 (JP)
(74) Representative: Vossius & Partner Patentanwälte Rechtsanwälte mbB
(86) International application number: PCT/JP2023/035246
(87) International publication number: WO 2024/071236

(57) **Abstract**

The present invention relates to a nonwoven fabric formed from fibers including a poly(3-hydroxyalkanoate) resin, and provides, for example, a nonwoven fabric that has excellent heat fusibility with another material. The present invention is, for example, a nonwoven fabric including fibers, wherein: the fibers are formed from a resin composition containing a poly(3-hydroxyalkanoate) resin; the poly(3-hydroxyalkanoate) resin includes a 3-hydroxybutyrate unit; a content ratio of the 3-hydroxybutyrate unit in the poly(3-hydroxyalkanoate) resin included in the nonwoven fabric is from 91.0% by mole to 97.0% by mole; and an enthalpy of fusion of an endothermic peak in a DSC curve of the nonwoven fabric is 50.0 J/g or greater.

## Description

### Technical Field

The present invention relates to a nonwoven fabric and a method for producing a melt-blown nonwoven fabric, a heat-fused article and a method for producing the same, a coffee filter, and a coffee capsule.

### Background Art

A melt-blown nonwoven fabric is a nonwoven fabric obtained by a melt-blown technique, in which a polymer and hot gas are discharged together from a spinneret. The melt-blown nonwoven fabric has a microporous structure.

A nonwoven fabric such as a melt-blown nonwoven fabric is used as, for example, a material of a filter for particle filtration.

Examples of the filter include a removal filter to remove particles (e.g., particles to which viruses or the like are attached, pollen, etc.) (the removal filter herein is a concept encompassing, for example, a filter for a face mask and a barrier filter), a blood filter to filter out blood cells, and a beverage extraction filter (e.g., a coffee dripping filter or a tea bag) (see Patent Literature 1, for example).

Also, a coffee capsule including a capsule body and a cover has been known (see Patent Literature 2, for example). The capsule body is fabricated from polylactic acid (PLA). The cover includes a nonwoven fabric material formed from PLA fibers.

In order to reduce the load on the global environment, fibers including a poly(hydroxyalkanoate) resin, which is a biodegradable resin, are used as fibers from which the nonwoven fabric is formed (see Patent Literature 3, for example).

### Citation List

### Patent Literature

PTL 1: Japanese National Phase PCT Laid-Open Application Publication No. 2022-505070
PTL 2: Japanese National Phase PCT Laid-Open Application Publication No. 2019-517959
PTL 3: WO 2022/097528

### Summary of Invention

### Technical Problem

Incidentally, a heat-fused article in which a nonwoven fabric formed from fibers including a polylactic acid resin and a nonwoven fabric formed from fibers including a cellulosic resin are heat-fused to each other is used, for example, as a coffee filter.

Here, poly(3-hydroxyalkanoate) resins have better biodegradability than polylactic acid resins.

In view of the above, the inventors of the present invention tried to fabricate the heat-fused article by using, instead of the nonwoven fabric formed from the fibers including a polylactic acid resin, a nonwoven fabric formed from fibers including a poly(3-hydroxyalkanoate) resin.

However, the conventional nonwoven fabric formed from the fibers including a poly(3-hydroxyalkanoate) resin was not sufficiently heat-fused to the nonwoven fabric formed from the fibers including a cellulosic resin.

A heat-fused article in which a nonwoven fabric including fibers and a molded article are heat-fused to each other has been used, for example, as the aforementioned coffee capsule.

As the nonwoven fabric, for example, a nonwoven fabric including fibers containing a polylactic acid resin is used. Also, as the molded article, for example, a molded article formed from a resin composition containing a poly(3-hydroxyalkanoate) resin is used.

Here, since poly(3-hydroxyalkanoate) resins have better biodegradability than polylactic acid resins as mentioned above, the inventors of the present invention also tried to fabricate the heat-fused article by using, instead of the nonwoven fabric formed from the fibers including a polylactic acid resin, a nonwoven fabric formed from fibers including a poly(3-hydroxyalkanoate) resin.

However, the nonwoven fabric formed from the fibers including a poly(3-hydroxyalkanoate) resin and the molded article including a poly(3-hydroxyalkanoate) resin were not sufficiently heat-fused to each other.

In view of the above, the present invention relates to a nonwoven fabric formed from fibers including a poly(3-hydroxyalkanoate) resin, and a first problem to be solved by the present invention is to provide the nonwoven fabric that has excellent heat fusibility with another material (e.g., with a nonwoven fabric including cellulosic fibers or with a molded article including a poly(3-hydroxyalkanoate) resin).

A second problem to be solved by the present invention is to provide a heat-fused article in which the above nonwoven fabric and a nonwoven fabric including cellulosic fibers or a molded article including a poly(3-hydroxyalkanoate) resin are heat fused to each other.

A third problem to be solved by the present invention is to provide a coffee filter or coffee capsule formed from the above heat-fused article.

### Solution to Problem

A first aspect of the present invention relates to a nonwoven fabric including fibers, wherein: the fibers are formed from a resin composition containing a poly(3-hydroxyalkanoate) resin; the poly(3-hydroxyalkanoate) resin includes a 3-hydroxybutyrate unit; a content ratio of the 3-hydroxybutyrate unit in the poly(3-hydroxyalkanoate) resin included in the nonwoven fabric is from 91.0% by mole to 97.0% by mole; and an enthalpy of fusion of an endothermic peak in a DSC curve of the nonwoven fabric is 50.0 J/g or greater.

A second aspect of the present invention relates to a heat-fused article including: the nonwoven fabric; and a nonwoven fabric including cellulosic fibers, wherein the nonwoven fabric and the nonwoven fabric including the cellulosic fibers are heat-fused to each other.

A third aspect of the present invention relates to a coffee filter formed from the heat-fused article.

A fourth aspect of the present invention is a heat-fused article including a nonwoven fabric and a molded article that are heat-fused to each other, the nonwoven fabric including fibers, wherein: the fibers are formed from a first resin composition containing a poly(3-hydroxyalkanoate) resin; the molded article is formed from a second resin composition containing a poly(3-hydroxyalkanoate) resin; a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and the nonwoven fabric is the nonwoven fabric of the first aspect of the present invention.

Preferably, the heat-fused article is a container including a container body with an opening and including a cover that seals the opening; the container body is the molded article; the cover includes the nonwoven fabric; and the nonwoven fabric and the molded article are heat-fused to each other at the opening.

A fifth aspect of the present invention is a coffee capsule including the heat-fused article, wherein: the container body includes an interior space; and the interior space accommodates ground coffee therein.

A sixth aspect of the present invention is a method for producing a heat-fused article, the method including heat-fusing a nonwoven fabric and a molded article to each other to obtain the heat-fused article, the nonwoven fabric including fibers, wherein: the fibers are formed from a first resin composition containing a poly(3-hydroxyalkanoate) resin; the molded article is formed from a second resin composition containing a poly(3-hydroxyalkanoate) resin; a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and the nonwoven fabric is the nonwoven fabric of the first aspect of the present invention.

A seventh aspect of the present invention relates to a method for producing a melt-blown nonwoven fabric including fibers by using a nozzle including a nozzle hole, the method including the steps of: (A) obtaining a raw filament by discharging a molten product through the nozzle hole; and (B) drawing the raw filament by blowing a gas onto the raw filament, wherein: the molten product contains a poly(3-hydroxyalkanoate) resin; the poly(3-hydroxyalkanoate) resin includes a 3-hydroxybutyrate unit; a content ratio of the 3-hydroxybutyrate unit in the poly(3-hydroxyalkanoate) resin contained in the molten product is from 91.0% by mole to 97.0% by mole; and in the step (B), a flow rate of the gas blown onto the raw filament is 900 NL/min/600mm or greater.

### Advantageous Effects of Invention

The present invention relates to a nonwoven fabric formed from fibers including a poly(3-hydroxyalkanoate) resin, and makes it possible to provide a nonwoven fabric that has excellent heat fusibility with another material.

The present invention also makes it possible to provide a heat-fused article in which the nonwoven fabric and a nonwoven fabric including cellulosic fibers or a molded article including a poly(3-hydroxyalkanoate) resin are heat-fused to each other.

The present invention further makes it possible to provide a coffee filter or coffee capsule formed from the heat-fused article.

### Brief Description of Drawings

FIG. 1 is a schematic sectional view of a container.
FIG. 2 is a schematic diagram showing a nonwoven fabric producing apparatus.
FIG. 3 is a schematic perspective view of a nozzle.
FIG. 4 is a schematic sectional view of a nozzle hole and a conveyor belt.
FIG. 5 shows the DSC curve of a nonwoven fabric of Example 2.
FIG. 6 is a side view of a heat-fused article of each of Examples and Comparative Example.
FIG. 7 is a plan view of the heat-fused article of each of Examples and Comparative Example.
FIG. 8 shows the DSC curve of a molded article.

### Description of Embodiments

Hereinafter, one embodiment of the present invention is described with reference to the accompanying drawings.

### <Nonwoven Fabric>

First, a nonwoven fabric according to the present embodiment is described.

The nonwoven fabric according to the present embodiment includes fibers.

The fibers are formed from a resin composition containing a poly(3-hydroxyalkanoate) resin (hereinafter, this resin composition is referred to also as "first resin composition".

The poly(3-hydroxyalkanoate) resin includes a 3-hydroxybutyrate unit.

The content ratio of the 3-hydroxybutyrate unit in the poly(3-hydroxyalkanoate) resin included in the nonwoven fabric is from 91.0% by mole to 97.0% by mole.

The enthalpy of fusion of an endothermic peak in a DSC curve of the non-woven fabric is 50.0 J/g or greater.

The first resin composition contains a polymer component. The first resin composition may further contain an additive.

The polymer component contains a poly(3-hydroxyalkanoate) resin.

The polymer component may contain another polymer in addition to the poly(3-hydroxyalkanoate) resin.

The poly(3-hydroxyalkanoate) resin is a polyester including a 3-hydroxyalkanoic acid as a monomer.

That is, the poly(3-hydroxyalkanoate) resin is a resin including the 3-hydroxyalkanoic acid as a structural unit.

The poly(3-hydroxyalkanoate) resin is a biodegradable polymer.

It should be noted that being "biodegradable" in the present embodiment means being able to be decomposed into low molecular weight compounds by microorganisms in a natural environment. Being biodegradable or not can be determined based on tests suited for different environments. Specifically, for example, ISO 14855 (compost) and ISO 14851 (activated sludge) are suited for an aerobic condition, and ISO 14853 (aqueous phase) and ISO 15985 (solid phase) are suited for an anaerobic condition. Also, biodegradability by microorganisms in seawater can be evaluated by biochemical oxygen demand measurement.

The poly(3-hydroxyalkanoate) resin includes the 3-hydroxybutyrate unit. That is, the poly(3-hydroxyalkanoate) resin includes a polymer including the 3-hydroxybutyrate unit.

The polymer including the 3-hydroxybutyrate unit preferably includes a copolymer including the 3-hydroxybutyrate unit. The polymer including the 3-hydroxybutyrate unit may include a homopolymer (P3HB).

In the copolymer including the 3-hydroxybutyrate unit, examples of a monomer unit other than the 3-hydroxybutyrate unit include a hydroxyalkanoate unit other than the 3-hydroxybutyrate unit.

Examples of the hydroxyalkanoate unit other than the 3-hydroxybutyrate unit include 3-hydroxyhexanoate, 3-hydroxyoctanoate, 3-hydroxyoctadecanoate, 3-hydroxyvalerate, and 4-hydroxybutyrate.

Examples of the copolymer including the 3-hydroxybutyrate unit includes P3HB3HH, P3HB3HV, P3HB4HB, poly(3-hydroxybutyrate-co-3-hydroxyoctanoate), and poly(3-hydroxybutyrate-co-3-hydroxyoctadecanoate).

P3HB3HH herein means poly(3-hydroxybutyrate-co-3-hydroxyhexanoate).

P3HB3HV herein means poly(3-hydroxybutyrate-co-3-hydroxyvalerate).

P3HB4HB herein means poly(3-hydroxybutyrate-co-4-hydroxybutyrate).

Only one kind of copolymer including the 3-hydroxybutyrate unit, or two or more kinds of copolymers each including the 3-hydroxybutyrate unit, may be included in the poly(3-hydroxyalkanoate) resin.

The copolymer including the 3-hydroxybutyrate unit is preferably P3HB3HH.

The first resin composition preferably contains 50% by mass or greater of the polymer including the 3-hydroxybutyrate unit, more preferably contains 80% by mass or greater thereof, or even more preferably contains 90% by mass or greater thereof.

Also, the first resin composition preferably contains 50% by mass or greater of the copolymer including the 3-hydroxybutyrate unit, more preferably 80% by mass or greater thereof, or even more preferably 90% by mass or greater thereof.

In the poly(3-hydroxyalkanoate) resin, the content ratio of the 3-hydroxybutyrate unit is from 91.0% by mole to 97.0% by mole, preferably from 91.5% by mole to 96.5% by mole, or more preferably from 92.0% by mole to 96.0% by mole.

As a result of the content ratio of the 3-hydroxybutyrate unit in the poly(3-hydroxyalkanoate) resin being 91.0% by mole or greater, the crystallinity of the fibers is increased, and the stiffness of the fibers is increased.

As a result of the content ratio of the 3-hydroxybutyrate unit in the poly(3-hydroxyalkanoate) resin being 97.0% by mole or less, the elongation at break of the nonwoven fabric according to the present embodiment is increased, and the nonwoven fabric is tear-resistant. Further, as a result of the content ratio of the 3-hydroxybutyrate unit in the poly(3-hydroxyalkanoate) resin being 97.0% by mole or less, fluffing of the nonwoven fabric according to the present embodiment is less likely to occur.

It should be noted that the content ratio of the 3-hydroxybutyrate unit in the poly(3-hydroxyalkanoate) resin means the content ratio of the 3-hydroxybutyrate unit in the entire poly(3-hydroxyalkanoate) resin included in the nonwoven fabric.

The content ratio of the 3-hydroxybutyrate unit in the poly(3-hydroxyalkanoate) resin can be determined in a manner described below in Examples.

The content ratio of the 3-hydroxybutyrate unit in the entire poly(3-hydroxyalkanoate) resin included in a first raw material composition (the "first raw material composition" will be described below) may be defined as the content ratio of the 3-hydroxybutyrate unit in the poly(3-hydroxyalkanoate) resin of the nonwoven fabric.

Examples of the poly(3-hydroxyalkanoate) resin, other than the polymer including the 3-hydroxybutyrate unit, include poly(3-hydroxyvalerate) and poly (3-hydroxyhexanoate).

It should be noted that P3HB has a function to facilitate the crystallization of P3HB itself and the crystallization of a poly(3-hydroxyalkanoate) resin other than P3HB.

The aforementioned another polymer is preferably biodegradable.

Examples of this other polymer that is biodegradable include polycaprolactone, polylactic acid, polybutylene succinate, polybutylene succinate adipate, polybutylene adipate terephthalate, polyethylene succinate, polyvinyl alcohol, polyglycolic acid, unmodified starch, modified starch, cellulose acetate, and chitosan.

The polycaprolactone is a polymer obtained by ring-opening polymerization of ε-caprolactone.

The first resin composition may include one kind of this other polymer, or two or more kinds of these other polymers.

Since the nonwoven fabric according to the present embodiment includes the biodegradable polymer(s), even if the nonwoven fabric is discarded in an environment, since the nonwoven fabric is readily decomposed in the environment, the load on the environment can be reduced.

The first resin composition may further contain an additive.

Examples of the additive include a crystal nucleating agent, a lubricant, a stabilizer (such as an antioxidant or ultraviolet absorber), a colorant (such as a dye or pigment), a plasticizer, an inorganic filler, an organic filler, and an antistatic agent.

Preferably, the first resin composition contains a crystal nucleating agent as the additive.

The crystal nucleating agent is a compound that facilitates the crystallization of the poly(3-hydroxyalkanoate) resin. The crystal nucleating agent has a melting point higher than that of the poly(3-hydroxyalkanoate) resin.

Since the first resin composition contains the crystal nucleating agent, at the time of fabrication of the nonwoven fabric, the crystallization of the poly(3-hydroxyalkanoate) resin is facilitated, and the fibers that are adjacent to each other are not easily fused to each other. This consequently makes it possible to readily reduce the coefficient of variation of the fiber diameters of the fibers.

Examples of the crystal nucleating agent include: inorganic substances (e.g., boron nitride, titanium oxide, talc, layered silicate, calcium carbonate, sodium chloride, metal phosphate, etc.); sugar alcohol compounds derived from natural products (e.g., pentaerythritol, erythritol, galactitol, mannitol, arabitol, etc.); polyvinyl alcohol; chitin; chitosan; polyethylene oxides; aliphatic carboxylates; aliphatic alcohols; aliphatic carboxylic acid esters; dicarboxylic acid derivatives (e.g., dimethyl adipate, dibutyl adipate, di-isodecyl adipate, dibutyl sebacate, etc.); cyclic compounds having, in their molecule, C=O and a functional group selected from the group consisting of NH, S, and O (e.g., indigo, quinacridone, quinacridone magenta, etc.); sorbitol derivatives (e.g., bis-benzylidene sorbitol, bis(p-methylbenzylidene)sorbitol, etc.); compounds including a nitrogen-containing heteroaromatic nucleus (e.g., pyridine ring, triazine ring, imidazole ring, etc.) (e.g., pyridine, triazine, imidazole, etc.); phosphate ester compounds; bisamides of higher fatty acids; metal salts of higher fatty acids; and branched polylactic acid.

It should be noted that P3HB, which is a poly(3-hydroxyalkanoate) resin, can be used as the crystal nucleating agent.

One of these crystal nucleating agents may be used alone, or two or more of these crystal nucleating agents may be used in combination.

As the crystal nucleating agent, sugar alcohol compounds, polyvinyl alcohol, chitin, and chitosan are preferable in light of the effect of improving the crystallization rate of the poly(3-hydroxyalkanoate) resin as well as in light of compatibility and affinity with the poly(3-hydroxyalkanoate) resin.

Among the sugar alcohol compounds, pentaerythritol is preferable.

The crystal nucleating agent preferably has a crystal structure at normal temperature (25°C).

Since the crystal nucleating agent has a crystal structure at normal temperature (25°C), the crystallization of the poly(3-hydroxyalkanoate) resin is further facilitated, which is advantageous.

The crystal nucleating agent that has a crystal structure at normal temperature (25°C) is preferably powdery at normal temperature (25°C).

The crystal nucleating agent that is powdery at normal temperature (25°C) preferably has a mean particle diameter of 10 µm or less.

The content of the crystal nucleating agent in the first resin composition is preferably 0.1 parts by mass or greater, more preferably 0.3 parts by mass or greater, or even more preferably 0.5 parts by mass or greater, with respect to 100 parts by mass of the poly(3-hydroxyalkanoate) resin.

As a result of the content of the crystal nucleating agent in the first resin composition being 0.1 parts by mass or greater with respect to 100 parts by mass of the poly(3-hydroxyalkanoate) resin, the crystallization of the poly(3-hydroxyalkanoate) resin at the time of fabrication of the nonwoven fabric is even further facilitated, which is advantageous.

Also, the content of the crystal nucleating agent in the first resin composition is preferably 2.5 parts by mass or less, or more preferably 2.0 parts by mass or less, with respect to 100 parts by mass of the poly(3-hydroxyalkanoate) resin.

As a result of the content of the crystal nucleating agent in the first resin composition being 2.5 parts by mass or less with respect to 100 parts by mass of the poly(3-hydroxyalkanoate) resin, the fibers are readily obtained at the time of fabrication of the nonwoven fabric, which is advantageous.

It should be noted that since P3HB is a poly(3-hydroxyalkanoate) resin and can also function as a crystal nucleating agent, in a case where the first resin composition contains P3HB, the amount of P3HB is included in both the amount of poly(3-hydroxyalkanoate) resin and the amount of crystal nucleating agent.

The first resin composition preferably contains the lubricant.

As a result of the lubricant being included in the fibers, the slipperiness of the fibers at the time of fabrication of the nonwoven fabric is improved, which makes it possible to suppress the fibers from begin fused to each other.

The lubricant is, for example, a compound having an amide bond.

The compound having an amide bond preferably includes at least one selected from the group consisting of lauric acid amide, myristic acid amide, stearic acid amide, behenic acid amide, and erucic acid amide.

The content of the lubricant in the first resin composition is preferably 0.05 parts by mass or greater, more preferably 0.10 parts by mass or greater, or even more preferably 0.5 parts by mass or greater, with respect to 100 parts by mass of the polymer component. As a result of the content of the lubricant in the first resin composition being 0.05 parts by mass or greater with respect to 100 parts by mass of the polymer component, the fibers can be further suppressed from being fused to each other at the time of fabrication of the nonwoven fabric, which is advantageous.

Also, the content of the lubricant in the first resin composition is preferably 12 parts by mass or less, more preferably 10 parts by mass or less, even more preferably 8 parts by mass or less, or most preferably 5 parts by mass or less, with respect to 100 parts by mass of the polymer component. As a result of the content of the lubricant in the first resin composition being 12 parts by mass or less with respect to 100 parts by mass of the polymer component, the lubricant can be suppressed from bleeding out on the surface of the fibers, which is advantageous.

The melt mass-flow rate (MFR) of the first resin composition at 165°C is preferably from 50 to 1,500 g/10min, more preferably from 70 to 1,500 g/10min, even more preferably from 80 to 1,300 g/10min, or particularly preferably from 80 to 1,200 g/10min.

As a result of the melt mass-flow rate of the first resin composition in the fibers at 165°C being 1,500 g/10min or less, the strength and stretchability of the nonwoven fabric are increased.

As a result of the melt mass-flow rate of the first resin composition in the fibers at 165°C being 50 g/10min or greater, at the time of drawing a fibrous molten product, tensile force applied to the fibrous molten product can be reduced, which makes it possible to readily reduce the fiber diameters of the fibers in the obtained nonwoven fabric.

It should be noted that the melt mass-flow rate (MFR) of the first resin composition at 165°C is determined in the following manner: determining the melt volume-flow rate (MVR) of the first resin composition at 165°C in accordance with the method B of ASTM-D 1238 (ISO1133-1, JIS K7210-1:2011); and then determining the melt mass-flow rate (MFR) of the first resin composition at 165°C from the determined melt volume-flow rate (MVR) of the first resin composition at 165°C and the density of the resin composition.

Here, the melt volume-flow rate (MVR) of the first resin composition at 165°C is measured in the following manner: heating 5 g or more of the first resin composition at 165°C for four minutes; and then, while applying a load of 5 kg onto the heated first resin composition, measuring the melt volume-flow rate (MVR) of the first resin composition.

The weight-average molecular weight of the first resin composition is preferably from 100,000 to 250,000, more preferably from 110,000 to 200,000, or even more preferably from 110,000 to 180,000.

As a result of the weight-average molecular weight of the first resin composition in the fibers being 100,000 or greater, the strength and stretchability of the nonwoven fabric are increased.

As a result of the weight-average molecular weight of the first resin composition in the fibers being 250,000 or less, at the time of drawing a fibrous molten product, tensile force applied to the fibrous molten product can be reduced, which makes it possible to readily reduce the fiber diameters of the fibers in the obtained nonwoven fabric.

It should be noted that the weight-average molecular weight in the present embodiment is measured based on a molecular weight distribution in terms of polystyrene by using gel permeation chromatography (GPC) using a chloroform eluent. A column used in the GPC may be any column suitable for measuring the molecular weight.

As the conditions for the GPC measurement, those mentioned below in Examples can be used.

The average value of the fiber diameters of the fibers is preferably 3.3 µm or greater, more preferably from 3.3 µm to 15.0 µm, even more preferably from 3.3 µm to 12.0 µm, or particularly preferably from 3.3 µm to 10.0 µm.

The coefficient of variation of the fiber diameters of the fibers is preferably 0.40 or less, more preferably 0.36 or less, or even more preferably 0.32 or less. Also, the coefficient of variation of the fiber diameters of the fibers is, for example, 0.10 or greater.

As a result of the average value of the fiber diameters of the fibers being 3.3 µm or greater, the strength and stretchability of the nonwoven fabric are increased.

As a result of the average value of the fiber diameters of the fibers being 15.0 µm or less, the particle filtration efficiency of the nonwoven fabric is increased.

As a result of the coefficient of variation of the fiber diameters of the fibers being 0.40 or less, excessively thick fibers are reduced, and the uniformity of the nonwoven fabric as a filter is increased. Consequently, the particle filtration efficiency of the nonwoven fabric is further increased. Further, as a result of the coefficient of variation of the fiber diameters of the fibers being 0.40 or less, excessively thin fibers are reduced, and consequently, the tensile strength of the nonwoven fabric is increased.

It should be noted that the average value and the coefficient of variation of the fiber diameters of the fibers can be determined in a manner described below.

First, a test piece is obtained from the nonwoven fabric.

Next, photographs (magnification: 1700x) of the surface of the test piece at five different locations on the surface of the test piece are taken by a scanning electron microscope.

Then, 20 or more fibers are randomly selected in each photograph, and the diameter (width) of each of the selected fibers is measured.

Next, based on the measured diameter (width) values of all the selected fibers, an arithmetic average value and a coefficient of variation (= standard deviation / arithmetic average value) are determined.

The enthalpy of fusion of the endothermic peak in the DSC curve of the nonwoven fabric according to the present embodiment is 50.0 J/g or greater, preferably from 50.5 to 90.0 J/g, more preferably from 51.0 to 70.0 J/g, or even more preferably 51.0 J/g or greater but less than 64.5 J/g.

As a result of the enthalpy of fusion of the endothermic peak in the DSC curve of the nonwoven fabric according to the present embodiment being 50.0 J/g or greater, the crystallinity is increased.

Therefore, even when the nonwoven fabric according to the present embodiment is sufficiently heat-fused to another material (e.g., to a nonwoven fabric including cellulosic fibers or to a molded article including a poly(3-hydroxyalkanoate) resin), the crystals remain at the interface, and the strength tends to be maintained. That is, the nonwoven fabric according to the present embodiment has excellent heat fusibility with another material (e.g., with a nonwoven fabric including cellulosic fibers or with a molded article including a poly(3-hydroxyalkanoate) resin).

In the present embodiment, the enthalpy of fusion of the endothermic peak in the DSC curve can be determined based on the area of the endothermic peak in the DSC curve in accordance with a method described in JIS K7122-1987 "Testing Methods for Heat of Transitions of Plastics".

The melting point of the molded article, which will be described below, is the peak top temperature of the endothermic peak in the DSC curve, and can be determined in accordance with a method described in JIS K7121-1987 "Testing Methods for Transition Temperatures of Plastics".

Specifically, with use of a differential scanning calorimeter (e.g., Differential Scanning Calorimeter DSC 25 available from TA Instruments), a sample in an amount of about 6.5 mg put in a measurement container is subjected to both heating and cooling at a heating rate of 10 °C/min and a cooling rate of 10 °C/min within a temperature range of -30°C to 180°C while flowing a nitrogen gas at a flow rate of 30 ml/min. The area of the endothermic peak when the sample is subjected to the heating for the second time is measured, and the area of the endothermic peak is determined as the enthalpy of fusion of the endothermic peak. Also, the peak top temperature of the endothermic peak when the sample is subjected to the heating for the second time is determined as the melting point of the molded article.

In a case where there are two or more endothermic peaks, the total area of all of the endothermic peaks is determined as the enthalpy of fusion of the endothermic peak, and the peak top temperature of the endothermic peak that is located on the highest temperature side among all of the endothermic peaks is determined as the melting point of the molded article.

The areal weight of the nonwoven fabric according to the present embodiment is preferably from 20 to 80 g/m², more preferably from 25 to 77 g/m², or even more preferably from 30 to 75 g/m².

As a result of the areal weight of the nonwoven fabric according to the present embodiment being 20 g/m² or greater, the strength and stretchability of the nonwoven fabric are increased. Further, as a result of the areal weight of the nonwoven fabric according to the present embodiment being 20 g/m² or greater, the particle filtration efficiency of the nonwoven fabric is further increased.

As a result of the areal weight of the nonwoven fabric according to the present embodiment being 80 g/m² or less, the solution permeability (e.g., water permeability) or air permeability of the nonwoven fabric can be increased.

It should be noted that the areal weight of the nonwoven fabric according to the present embodiment can be determined in a manner described below.

First, a test piece is obtained from the nonwoven fabric according to the present embodiment.

The size of the test piece may be, for example, 100 mm × 100 mm, or 200 mm × 200 mm.

Next, the weight of the test piece is measured by an electronic balance or the like.

Then, the measured weight of the test piece is divided by the area of the test piece to calculate the areal weight.

The thickness of the nonwoven fabric according to the present embodiment is preferably from 0.10 to 0.40 mm, or more preferably from 0.15 to 0.35 mm.

As a result of the thickness of the nonwoven fabric according to the present embodiment being from 0.10 to 0.40 mm, at the time of fabrication of the nonwoven fabric, the nonwoven fabric having uniform quality can be readily obtained.

As a result of the thickness of the nonwoven fabric according to the present embodiment being 0.10 mm or greater, the strength and stretchability of the nonwoven fabric are increased.

Further, as a result of the thickness of the nonwoven fabric according to the present embodiment being from 0.10 to 0.40 mm, the solution permeability (e.g., water permeability) or air permeability of the nonwoven fabric can be increased while increasing the particle filtration efficiency of the nonwoven fabric.

It should be noted that the thickness of the nonwoven fabric according to the present embodiment can be determined in the following manner: measuring the thickness of the nonwoven fabric at three or more locations thereon by a thickness gauge; and then determining the arithmetic average value thereof as the thickness of the nonwoven fabric.

The thickness gauge used herein is, for example, "PEACOCK" available from OZAKI MFG. CO., LTD.

The average pore diameter of the nonwoven fabric according to the present embodiment is preferably from 2.5 µm to 10.0 µm, or more preferably from 3.0 µm to 7.0 µm.

As a result of the average pore diameter of the nonwoven fabric according to the present embodiment being 2.5 µm or greater, the solution permeability (e.g., water permeability) or air permeability of the nonwoven fabric can be increased.

As a result of the average pore diameter of the nonwoven fabric according to the present embodiment being 10.0 µm or less, the particle filtration efficiency of the nonwoven fabric is further increased.

The average pore diameter of the nonwoven fabric according to the present embodiment is a mean flow pore diameter determined in accordance with JIS K3832-1990 "Testing methods for bubble point of membrane filters".

The mean flow pore diameter can be measured by using, for example, Perm-Porometer (available from Porous Materials, Inc.).

The nonwoven fabric is preferably a direct-spun nonwoven fabric.

The direct-spun nonwoven fabric means "a nonwoven fabric obtained by intertwining raw filaments obtained from melt spinning directly into a sheet shape and solidifying the sheet-shaped raw filaments". It should be noted that "intertwining raw filaments ... directly into a sheet shape" means "intertwining raw filaments into a sheet shape before the raw filaments are solidified".

Examples of the direct-spun nonwoven fabric include a melt-blown nonwoven fabric, a spun-bonded nonwoven fabric, a flash-spun nonwoven fabric, and an electrospun nonwoven fabric.

The melt-blown nonwoven fabric is a nonwoven fabric obtained by a melt-blown technique.

It should be noted that the melt-blown nonwoven fabric is a concept encompassing a nonwoven fabric obtained by the spun-blown (registered trademark) technique.

The nonwoven fabric is more preferably a melt-blown nonwoven fabric or a spun-bonded nonwoven fabric, or even more preferably a melt-blown nonwoven fabric.

The maximum load on the nonwoven fabric according to the present embodiment in a MD direction is preferably 0.7 N or greater, more preferably 0.8 N or greater, or even more preferably 0.9 N or greater. The maximum load on the nonwoven fabric according to the present embodiment in the MD direction is, for example, 10.0 N or less.

As a result of the maximum load of the nonwoven fabric according to the present embodiment in the MD direction being 0.7 N or greater, the nonwoven fabric according to the present embodiment is less likely to be torn even when being pulled in the MD direction.

The maximum load on the nonwoven fabric according to the present embodiment in a CD direction is preferably 0.7 N or greater, more preferably 0.8 N or greater, or even more preferably 0.9 N or greater. The maximum load on the nonwoven fabric according to the present embodiment in the CD direction is, for example, 10.0 N or less.

As a result of the maximum load on the nonwoven fabric according to the present embodiment in the CD direction being 0.7 N or greater, the nonwoven fabric according to the present embodiment is less likely to be torn even when being pulled in the CD direction.

The tensile elongation at break of the nonwoven fabric according to the present embodiment in the MD direction (which may hereinafter be simply referred to as "MD elongation") is preferably 15% or greater, or more preferably 16% or greater. The MD elongation of the nonwoven fabric according to the present embodiment is, for example, 500% or less.

As a result of the MD elongation of the nonwoven fabric according to the present embodiment being 15% or greater, the nonwoven fabric according to the present embodiment is less likely to be torn even when being pulled in the MD direction.

The tensile elongation at break of the nonwoven fabric according to the present embodiment in the CD direction (which may hereinafter be simply referred to as "CD elongation") is preferably 15% or greater, or more preferably 16% or greater. The CD elongation of the nonwoven fabric according to the present embodiment is, for example, 500% or less.

As a result of the CD elongation of the nonwoven fabric according to the present embodiment being 15% or greater, the nonwoven fabric according to the present embodiment is less likely to be torn even when being pulled in the CD direction.

The MD direction herein means the direction (Machine Direction) in which the nonwoven fabric moves during the production of the nonwoven fabric.

The CD direction herein means the direction perpendicular to the MD direction.

The tensile elongation at break is referred to also as a tensile breaking elongation.

It should be noted that the maximum load and the tensile elongation at break in each of the CD direction and the MD direction can each be determined in a manner described below in Examples.

Two or more pieces of the nonwoven fabric according to the present embodiment may be layered together, which may be used as, for example, a material of a filter.

### <Heat-Fused Article According to First Embodiment>

A heat-fused article according to a first embodiment is a heat-fused article in which the nonwoven fabric according to the present embodiment and a nonwoven fabric including cellulosic fibers are heat-fused to each other.

Examples of the cellulosic fibers include cotton fibers, rayon (a concept encompassing cupra (which is referred to also as "copper ammonia rayon") and the like) fibers, and acetate fibers.

The heat-fused article according to the first embodiment has high particles filtration efficiency owing to the nonwoven fabric according to the present embodiment, and has further increased strength owing to the nonwoven fabric including the cellulosic fibers.

Examples of the nonwoven fabric including the cellulosic fibers include a spun-lace nonwoven fabric.

When heat-fusing the nonwoven fabric according to the present embodiment and the nonwoven fabric including the cellulosic fibers to each other, the nonwoven fabric according to the present embodiment melts due to the heat.

It should be noted that, in the heat-fused article according to the first embodiment, the nonwoven fabric according to the present embodiment and the nonwoven fabric including the cellulosic fibers may be directly fused to each other.

Alternatively, in the heat-fused article according to the first embodiment, the nonwoven fabric according to the present embodiment and the nonwoven fabric including the cellulosic fibers may be fused to each other via another layer. For example, these nonwoven fabrics may be fused to each other via a film layer that is formed from a film.

Examples of a material from which the film is formed include polybutylene adipate.

The heat-fused article according to the first embodiment is suitably usable as, for example, a material of a filter for particle filtration.

Examples of the filter include a beverage extraction filter (e.g., a coffee dripping filter or a tea bag), a removal filter to remove particles (e.g., particles to which viruses or the like are attached, pollen, etc.) (e.g., a filter for a face mask), and a blood filter to filter out blood cells.

### <Coffee Filter>

A coffee filter according to the present embodiment is formed from the heat-fused article according to the first embodiment.

### <Heat-Fused Article According to Second Embodiment>

A heat-fused article according to a second embodiment is a heat-fused article in which a nonwoven fabric including fibers and a molded article are heat-fused to each other.

The fibers are formed from the first resin composition containing the poly(3-hydroxyalkanoate) resin.

The molded article is formed from a second resin composition containing a poly(3-hydroxyalkanoate) resin.

A value obtained by subtracting the enthalpy of fusion of the endothermic peak in the DSC curve of the molded article from the enthalpy of fusion of the endothermic peak in the DSC curve of the nonwoven fabric is 2.5 J/g or greater.

The nonwoven fabric is the nonwoven fabric according to the present embodiment.

The nonwoven fabric and the molded article are directly heat-fused to each other.

### (Molded Article)

The molded article is formed from the second resin composition containing the poly(3-hydroxyalkanoate) resin.

The second resin composition of the molded article contains a polymer component. The second resin composition may further contain an additive.

Examples of the polymer component contained in the second resin composition include those polymer components listed above as examples of the polymer component contained in the first resin composition.

The poly(3-hydroxyalkanoate) resin preferably includes a 3-hydroxybutyrate unit.

The polymer including the 3-hydroxybutyrate unit preferably includes a copolymer including the 3-hydroxybutyrate unit.

The copolymer including the 3-hydroxybutyrate unit is preferably P3HB3HH.

The second resin composition preferably contains 50% by mass or greater of the polymer including the 3-hydroxybutyrate unit, more preferably contains 80% by mass or greater thereof, or even more preferably contains 90% by mass or greater thereof.

The second resin composition preferably contains 50% by mass or greater of the copolymer including the 3-hydroxybutyrate unit, more preferably contains 80% by mass or greater thereof, or even more preferably contains 90% by mass or greater thereof.

The content ratio of the 3-hydroxybutyrate unit in the poly(3-hydroxyalkanoate) resin is preferably from 88.0% by mole to 97.0% by mole, more preferably from 89.0% by mole to 96.5% by mole, or even more preferably from 91.0% by mole to 96.0% by mole.

As a result of the content ratio of the 3-hydroxybutyrate unit in the poly(3-hydroxyalkanoate) resin being 88.0% by mole or greater, the crystallinity of the molded article is increased, and the stiffness of the molded article is increased.

As a result of the content ratio of the 3-hydroxybutyrate unit in the poly(3-hydroxyalkanoate) resin being 97.0% by mole or less, the stretchability of the molded article, the flexibility of the molded article, and the toughness of the molded article are increased.

It should be noted that the content ratio of the 3-hydroxybutyrate unit in the poly(3-hydroxyalkanoate) resin means the content ratio of the 3-hydroxybutyrate unit in the entire poly(3-hydroxyalkanoate) resin included in the molded article.

Alternatively, the content ratio of the 3-hydroxybutyrate unit in the entire poly(3-hydroxyalkanoate) resin included in a second raw material composition (the "second raw material composition" will be described below) may be defined as the content ratio of the 3-hydroxybutyrate unit in the poly(3-hydroxyalkanoate) resin of the molded article.

Examples of the additive contained in the second resin composition include those additives listed above as examples of the additive contained in the first resin composition.

The weight-average molecular weight of the second resin composition is preferably from 100,000 to 250,000, more preferably from 110,000 to 200,000, or even more preferably from 110,000 to 180,000.

The value obtained by subtracting the enthalpy of fusion of the endothermic peak in the DSC curve of the molded article from the enthalpy of fusion of the endothermic peak in the DSC curve of the nonwoven fabric is 2.5 J/g or greater, preferably 3.0 J/g or greater, more preferably 3.5 J/g or greater, or even more preferably 3.7 J/g or greater.

The value obtained by subtracting the enthalpy of fusion of the endothermic peak in the DSC curve of the molded article from the enthalpy of fusion of the endothermic peak in the DSC curve of the nonwoven fabric is, for example, 10.0 J/g or less, or more specifically 5.0 J/g or less.

### (Configuration of Heat-Fused Article)

In the heat-fused article according to the second embodiment, since the value obtained by subtracting the enthalpy of fusion of the endothermic peak in the DSC curve of the molded article from the enthalpy of fusion of the endothermic peak in the DSC curve of the nonwoven fabric is 2.5 J/g or greater, when heat-fusing the nonwoven fabric and the molded article to each other, the molded article tends to melt more easily than the nonwoven fabric. As a result, a molten product of the molded article enters gaps in the nonwoven fabric, and thereby the nonwoven fabric and the molded article are sufficiently heat-fused to each other.

Further, when heat-fusing the nonwoven fabric and the molded article to each other, since the nonwoven fabric melts less easily than the molded article, the crystallinity of the nonwoven fabric is less likely to be reduced, and thereby the strength of the nonwoven fabric at the fusion interface is readily maintained.

Consequently, the heat-fused article according to the second embodiment has excellent heat fusibility between the nonwoven fabric and the molded article.

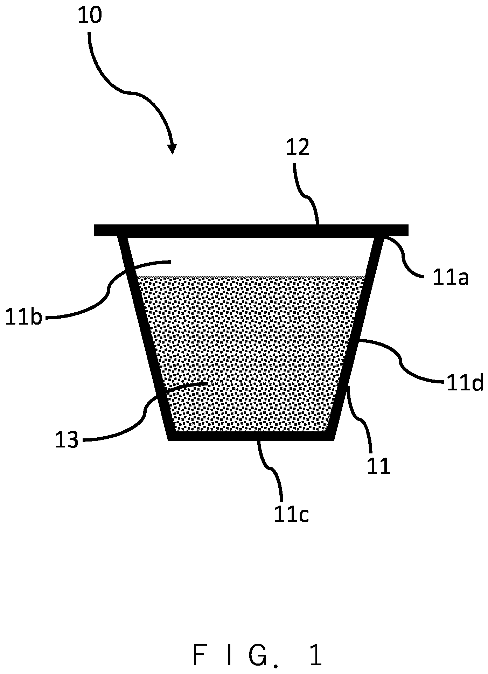

As shown in FIG. 1, the heat-fused article according to the second embodiment may be a container 10 including a container body 11 with an opening 11a and including a cover 12, which seals the opening 11a.

The container body 11 is the above-described molded article, and the cover 12 includes the above-described nonwoven fabric.

The nonwoven fabric and the molded article are heat-fused to each other at the opening 11a.

The container body 11 includes an interior space 11b.

The container body 11 includes: a bottom wall 11c; and a cylindrical side wall 11d, which extends upward from the outer peripheral edge of the upper surface of the bottom wall 11c.

The bottom wall 11c has a circular shape in a plan view. That is, the bottom wall 11c is a circular plate.

The side wall 11d has a cylindrical shape.

The cover 12 may be a stacked layer in which two or more layers are stacked together.

For example, the cover 12 may be a cover in which the above-described nonwoven fabric and a nonwoven fabric including cellulosic fibers are heat-fused to each other.

The cover 12 has a circular shape in a plan view.

Examples of the cellulosic fibers include cotton fibers, rayon (a concept encompassing cupra (which is referred to also as "copper ammonia rayon") and the like) fibers, and acetate fibers.

The cover is a heat-fused article that has high particle filtration efficiency owing to the nonwoven fabric including the poly(3-hydroxyalkanoate) resin, and has further increased strength owing to the nonwoven fabric including the cellulosic fibers.

Examples of the nonwoven fabric including the cellulosic fibers include a spun-lace nonwoven fabric.

When heat-fusing the nonwoven fabric including the poly(3-hydroxyalkanoate) resin and the nonwoven fabric including the cellulosic fibers to each other, the nonwoven fabric including the poly(3-hydroxyalkanoate) resin melts due to the heat.

It should be noted that, in the heat-fused article according to the second embodiment, the nonwoven fabric including the poly(3-hydroxyalkanoate) resin and the nonwoven fabric including the cellulosic fibers may be directly fused to each other.

Alternatively, in the heat-fused article according to the second embodiment, the nonwoven fabric including the poly(3-hydroxyalkanoate) resin and the nonwoven fabric including the cellulosic fibers may be fused to each other via another layer. For example, these nonwoven fabrics may be fused to each other via a film layer that is formed from a film.

Examples of a material from which the film is formed include polybutylene adipate.

The heat-fused article according to the second embodiment is suitably usable for, for example, a coffee capsule.

### <Coffee Capsule>

A coffee capsule according to the present embodiment includes the heat-fused article according to the second embodiment.

The heat-fused article is the container 10 including the container body 11 with the opening 11a and including the cover 12, which seals the opening 11a.

The container body 11 is the above-described molded article, and the cover 12 includes the above-described nonwoven fabric.

The nonwoven fabric and the molded article are heat-fused to each other at the opening 11a.

The container body 11 includes the interior space 11b.

In the coffee capsule according to the present embodiment, the interior space 11b accommodates ground coffee 13 therein.

### <Method for Producing Nonwoven Fabric>

A method for producing a nonwoven fabric according to the present embodiment is a method for producing a nonwoven fabric including fibers by using a nozzle including a nozzle hole.

The method for producing a nonwoven fabric according to the present embodiment includes the steps of: (A) obtaining a raw filament by discharging a molten product through the nozzle hole; and (B) drawing the raw filament by blowing a gas onto the raw filament.

The molten product contains a poly(3-hydroxyalkanoate) resin.

The poly(3-hydroxyalkanoate) resin includes a 3-hydroxybutyrate unit.

The content ratio of the 3-hydroxybutyrate unit in the poly(3-hydroxyalkanoate) resin contained in the molten product is from 91.0% by mole to 97.0% by mole.

In the step (B), the flow rate of the gas blown onto the raw filament is preferably 900 NL/min/600mm or greater.

First, the method for producing a nonwoven fabric according to the present embodiment is described by taking, as an example, a method in which the nonwoven fabric is obtained by a melt-blown technique.

It should be noted that the melt-blown technique is a concept encompassing the spun-blown (registered trademark) technique.

The molten product is obtained from the first raw material composition.

In the step (A), the molten product is obtained by heat-melting the first raw material composition, and the raw filament is obtained by discharging the molten product through the nozzle hole.

The melt mass-flow rate (MFR) of the first raw material composition at 165°C is preferably from 30 to 1,500 g/10min, more preferably from 30 to 1,000 g/10min, even more preferably from 50 to 1,000 g/10min, or particularly preferably from 50 to 800 g/10min.

As a result of the melt mass-flow rate of the first raw material composition at 165°C being 1,500 g/10min or less, the strength and stretchability of the nonwoven fabric are further increased.

As a result of the melt mass-flow rate of the first raw material composition at 165°C being 30 g/10min or greater, at the time of drawing a fibrous molten product, tensile force applied to the fibrous molten product can be reduced, which makes it possible to readily reduce the fiber diameters of the fibers in the obtained nonwoven fabric.

It should be noted that the melt mass-flow rate (MFR) of the first raw material composition at 165°C is determined in the following manner: determining the melt volume-flow rate (MVR) of the first raw material composition at 165°C in accordance with the method B of ASTM-D1238 (ISO1133-1, JIS K7210-1:2011); and then determining the melt mass-flow rate (MFR) of the first raw material composition at 165°C from the determined melt volume-flow rate (MVR) of the first raw material composition at 165°C and the density of the first raw material composition.

The melt volume-flow rate (MVR) of the first raw material composition at 165°C is measured in the following manner: heating 5 g or more of the first raw material composition at 165°C for four minutes; and then measuring the melt volume-flow rate (MVR) of the first raw material composition while applying a load of 5 kg onto the heated raw material composition.

The weight-average molecular weight of the first raw material composition is preferably from 100,000 to 350,000, more preferably from 110,000 to 300,000, or even more preferably from 110,000 to 250,000.

As a result of the weight-average molecular weight of the first raw material composition being 100,000 or greater, the strength and stretchability of the nonwoven fabric are further increased.

As a result of the weight-average molecular weight of the first raw material composition being 350,000 or less, at the time of drawing a fibrous molten product, tensile force applied to the fibrous molten product can be reduced, which makes it possible to readily reduce the fiber diameters of the fibers in the obtained nonwoven fabric.

In the method for producing a nonwoven fabric according to the present embodiment, the nonwoven fabric is obtained from the first raw material composition by using a nonwoven fabric producing apparatus.

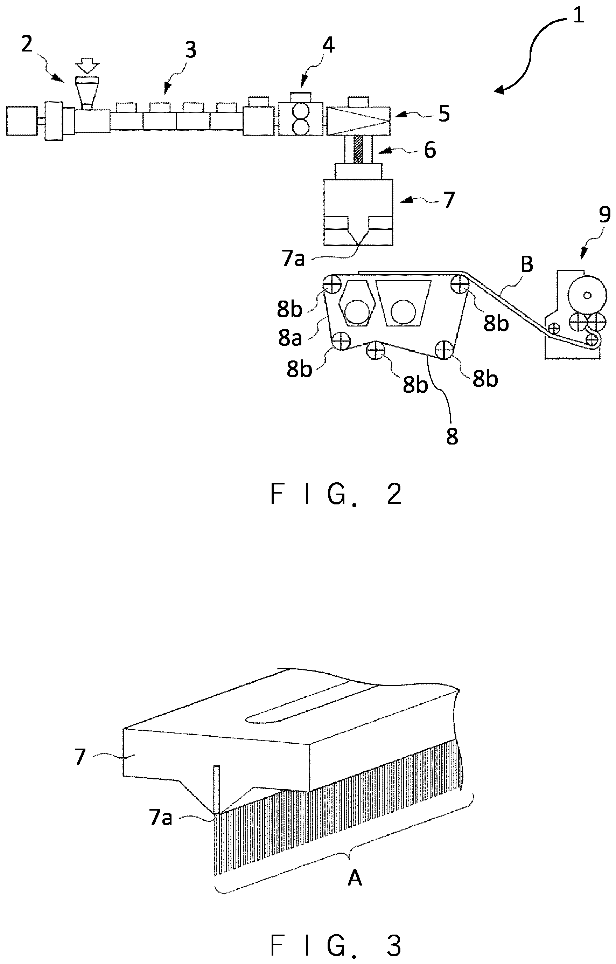

As shown in FIG. 2, the nonwoven fabric producing apparatus 1 includes: an extruder 3, which melts the first raw material composition to obtain a molten product; a hopper 2, which feeds the first raw material composition to the extruder 3; a kneader 6, which kneads the molten product to obtain the molten product in a kneaded state (which may be hereinafter referred to as "molten kneaded product"); a nozzle 7, which discharges the molten kneaded product in a fibrous form; a collector 8, which collects and cools the fibrous molten kneaded product to obtain a first nonwoven fabric B; and a winder 9, which winds the first nonwoven fabric B.

The nonwoven fabric producing apparatus 1 may, as necessary, further include a gear pump 4, which feeds the molten product to the kneader 6.

As a result of the nonwoven fabric producing apparatus 1 including the gear pump 4, the amount of the molten product fed to the kneader 6 can be suppressed from varying.

The nonwoven fabric producing apparatus 1 may, as necessary, further include a filter 5, which removes extraneous matter from the molten product at a position upstream of the kneader 6.

In the step (A), the first raw material composition is fed via the hopper 2 to the extruder 3, which melts the raw material composition, and thereby the molten product is obtained.

The first raw material composition fed to the extruder 3 is preferably solid, or more preferably in the form of pellets.

Preferably, the first raw material composition has been heated and dried before being fed to the extruder 3, in light of suppressing hydrolysis of the resin of the first raw material composition and suppressing oxidation degradation of the resin of the first raw material composition.

The amount of water in the first raw material composition fed to the extruder 3 is preferably 200 ppmw or less.

At the time of drying the first raw material composition, preferably, oxygen is removed from the atmosphere and from the first raw material composition. During the drying, the atmosphere is preferably an inert gas (e.g., nitrogen gas) atmosphere.

In the step (A), the drying of the first raw material composition may be performed before the first raw material composition is fed to the hopper 2. Alternatively, the hopper 2 may be a hopper dryer, and the drying of the first raw material composition may be performed by the hopper 2.

Examples of the extruder 3 include a single screw extruder, a co-rotating intermeshing twin screw extruder, a co-rotating non-intermeshing twin screw extruder, a counterrotating non-intermeshing twin screw extruder, and a multiple screw extruder.

The extruder 3 is preferably a single screw extruder for the following reasons: in the case of a single screw extruder, thermal degradation of the first raw material composition during the extrusion can be readily suppressed since less resin stagnation occurs in a single screw extruder; and also, the equipment cost of a single screw extruder is less than that of the other types of extruders.

In the step (A), the molten product is fed via the filter 5 to the kneader 6 by the gear pump 4, and the molten product is kneaded by the kneader 6 to obtain the molten kneaded product.

The filter 5 is, for example, a screen mesh, a pleats filter, or a leaf disc filter.

The filter 5 is preferably a leaf disc filter in light of filtration accuracy, filtration area, and pressure resistance performance as well as for the reason that clogging due to extraneous matter is less likely to occur in a case where the filer 5 is a leaf disc filter.

For example, a metal fiber sintered nonwoven fabric may be used as a filtering medium of the filter 5.

In the step (A), the molten kneaded product as the molten product is discharged in a fibrous form from the nozzle 7.

The nozzle 7 is a spinning die head.

In FIG. 3, the nozzle 7 includes a plurality of nozzle holes 7a, each of which discharges the molten kneaded product in a fibrous form. As shown in FIG. 3, the nozzle 7 discharges a plurality of fibrous molten kneaded products A.

It should be noted that the number of nozzle holes 7a included in the nozzle 7 may be one. That is, the number of raw filaments A discharged by the nozzle 7 may be one.

The plurality of nozzle holes 7a are open downward.

The shape of the opening of each nozzle hole 7a is, for example, a circular shape (the circular shape herein is a concept encompassing a circle shape, an approximately circle shape, an ellipse shape, and an approximately ellipse shape).

The diameter of the opening of each nozzle hole 7a is suitably selected in accordance with the fiber diameter of each fiber in the nonwoven fabric.

The diameter of the opening of each nozzle hole 7a is preferably 0.05 mm or greater, more preferably 0.10 mm or greater, or even more preferably 0.12 mm or greater.

Also, the diameter of the opening is preferably 1.0 mm or less, more preferably 0.50 mm or less, even more preferably less than 0.30 mm, or particularly preferably 0.25 mm or less.

The diameter of the opening means the arithmetic average value of the diameters of the respective openings.

The ratio of the opening area of each nozzle hole to the cross-sectional area of each fiber is preferably 900 or greater, more preferably from 2,000 to 20,000, or even more preferably from 3,000 to 15,000.

It should be noted that the ratio of the opening area of each nozzle hole to the cross-sectional area of each fiber serves as an index indicating a draw ratio.

As a result of the ratio of the opening area of each nozzle hole to the cross-sectional area of each fiber being 900 or greater, the enthalpy of fusion of the endothermic peak in the DSC curve of the obtained nonwoven fabric is high. Consequently, the nonwoven fabric has excellent heat fusibility with another material (e.g., with a nonwoven fabric including cellulosic fibers or with a molded article including a poly(3-hydroxyalkanoate) resin).

Further, as a result of the ratio of the opening area of each nozzle hole to the cross-sectional area of each fiber being 2,000 or greater, the fibers are sufficiently drawn and sufficiently crystallized. Consequently, the melt-blown nonwoven fabric is more excellent in terms of heat fusibility with another material (e.g., with a nonwoven fabric including cellulosic fibers or with a molded article including a poly(3-hydroxyalkanoate) resin).

Assuming that the cross section of each fiber is a circular shape, the cross-sectional area of each fiber can be determined from the average value of the fiber diameters of the respective fibers.

The opening area of each nozzle hole means the average value of the opening areas of the respective nozzle holes. It should be noted that in a case where the opening of each nozzle hole has a circular shape, the opening area of each nozzle hole can be determined from the arithmetic average value of the diameters of the respective openings.

The plurality of nozzle holes 7a of the nozzle 7 are spaced apart from each other and arranged in a line.

In FIG. 3, the plurality of nozzle holes 7a are arranged in one line.

It should be noted that the plurality of nozzle holes 7a may be arranged in two or more lines. In other words, the melt-blown technique may be the spun-blown (registered trademark) technique.

The distance between the nozzle holes 7a that are adjacent to each other (hereinafter, this distance is referred to also as "space") is, for example, preferably 0.05 mm or greater, more preferably 0.10 mm or greater, or even more preferably 0.20 mm or greater.

As a result of the distance (space) between the nozzle holes 7a that are adjacent to each other being 0.05 mm or greater, the fibers that are adjacent to each other can be suppressed from being fused to each other. This consequently makes it possible to reduce the coefficient of variation of the fiber diameters of the fibers.

Also, the distance (space) between the nozzle holes 7a that are adjacent to each other is, for example, preferably 1.0 mm or less, more preferably 0.7 mm or less, or even more preferably 0.5 mm or less.

The distance between the nozzle holes 7a that are adjacent to each other may be the same or not the same among all of the nozzle holes 7a. However, preferably, the distance between the nozzle holes 7a that are adjacent to each other is the same among all of the nozzle holes 7a, because, in this case, a nonwoven fabric having uniform quality can be readily produced.

The distance (space) between the nozzle holes 7a that are adjacent to each other means the arithmetic average value of the distances (spaces) between the nozzle holes 7a that are adjacent to each other.

The collector 8 includes a collecting surface to collect the fibrous kneaded products A.

The collector 8 is a conveyor.

The conveyor includes: a conveyor belt 8a including the collecting surface; and a plurality of rollers 8b to drive the conveyor belt 8a.

The collecting surface is positioned immediately below the nozzle holes 7a.

The conveyor belt 8a has air permeability. Specifically, the conveyor belt 8a is formed from a net-like material. That is, the collecting surface is a net-like surface.

It should be noted that the collector 8 may be configured differently, so long as the collector 8 includes a collecting unit. The collector 8 need not be the conveyor, but may be a collecting drum or a collecting net.

The distance between the collecting surface and the nozzle holes 7a (this distance is hereinafter referred to also as "DCD") is preferably 20 mm or greater, more preferably 50 mm or greater, or even more preferably 80 mm or greater.

Also, the distance (DCD) between the conveyor belt 8a as the collecting unit and the nozzle holes 7a is preferably 250 mm or less.

The distance (DCD) between the collecting surface and the nozzle holes 7a means the arithmetic average value of the distances (DCD) between the collecting surface and the nozzle holes 7a.

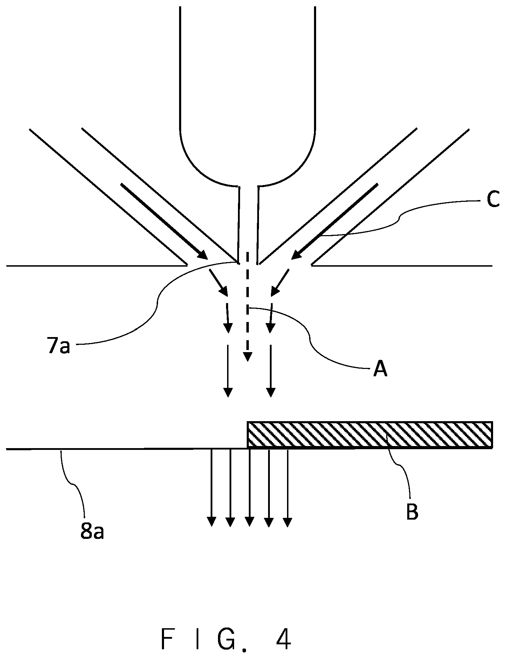

As shown in FIG. 4, the nonwoven fabric producing apparatus 1 is configured to blow a high-temperature gas C onto the fibrous molten kneaded products A to draw the fibrous molten kneaded products A.

In the step (B), the high-temperature gas C is blown onto the fibrous molten kneaded products A, and the high-temperature gas C that has been blown onto the molten kneaded products A is passed through the net-like conveyor belt 8a.

In the step (B), to facilitate the passing of the high-temperature gas C that has been blown onto the molten kneaded products A through the net-like conveyor belt 8a, the high-temperature gas C is preferably sucked by a suction device (not shown). This makes it possible to prevent the fibers from rebounding on the collecting surface of the net-like conveyor belt 8a. Consequently, the first nonwoven fabric B in which the fibers are favorably fused to each other can be readily formed.

Further, in the step (B), the fibrous molten kneaded products A that have been drawn are collected by the conveyor belt 8a, then cooled while being transported by the conveyor belt 8a, and thereby the first nonwoven fabric is obtained.

A material from which the net-like collecting surface is formed is not particularly limited, so long as the material has thermal resistance against the temperature conditions in the production of the first nonwoven fabric B, will not be excessively fused to the first nonwoven fabric B, and allows the first nonwoven fabric B to be detached from the material.

The gas C is, for example, air or inert gas (e.g., nitrogen gas).

The way to blow the high-temperature gas C is, for example, to heat the gas C that has been pressurized by a compressor (not shown) by a heater (not shown).

The flow rate of the high-temperature gas C blown onto the fibrous molten kneaded products A is preferably 900 NL/min/600mm or greater, more preferably 3,000 NL/min/600mm or greater, or even more preferably 4,000 NL/min/600mm or greater.

Also, the flow rate of the high-temperature gas C blown onto the fibrous molten kneaded products A is preferably 12,000 NL/min/600mm or less, or more preferably 10,000 NL/min/600mm or less.

It should be noted that the flow rate (in units of NL/min/600mm) of the gas C means a value obtained by unit conversion, that is, a value obtained by dividing the total flow rate (in units of NL/min) of the gas C by the length (width) of the nozzle 7 in the CD direction. The length (width) of the nozzle 7 in the CD direction means the length (width) (mm) of the gas C in the CD direction.

As a result of the flow rate of the gas C being 900 NL/min/600mm or greater, the enthalpy of fusion of the endothermic peak in the DSC curve of the obtained nonwoven fabric is high. Consequently, the nonwoven fabric has excellent heat fusibility with another material (e.g., with a nonwoven fabric including cellulosic fibers or with a molded article including a poly(3-hydroxyalkanoate) resin).

Further, as a result of the flow rate of the gas C being 3,000 NL/min/600mm or greater, the fibers are sufficiently drawn and sufficiently crystallized. Consequently, the nonwoven fabric has more excellent heat fusibility with another material (e.g., with a nonwoven fabric including cellulosic fibers or with a molded article including a poly(3-hydroxyalkanoate) resin).

In the step (B), the temperature and flow rate of the high-temperature gas C are suitably controlled to obtain the nonwoven fabric with high crystallization.

A moving speed at which the first nonwoven fabric B is moved on the conveyor belt 8a (i.e., the moving speed of the conveyor belt 8a) is suitably set in consideration of the apparent density of the obtained first nonwoven fabric B while taking into account the discharge amount of the first raw material composition.

The moving speed is preferably within a range from 1.0 m/min to 6.0 m/min.

In the step (B), the first nonwoven fabric B is transported to the winder 9 by the conveyor belt 8a, and the first nonwoven fabric B is wound into a roll by the winder 9.

The method for producing a nonwoven fabric according to the present embodiment may include a step (C) of obtaining a second nonwoven fabric by heating the first nonwoven fabric B obtained in the step (B).

It should be noted that, in a case where the method for producing a nonwoven fabric according to the present embodiment includes the step (C), the second nonwoven fabric is the above-described nonwoven fabric. On the other hand, in a case where the method for producing a nonwoven fabric according to the present embodiment does not include the step (C), the first nonwoven fabric is the above-described nonwoven fabric.

As a result of the step (C) being included in the method for producing a nonwoven fabric according to the present embodiment, the nonwoven fabric is made tear-resistant.

Further, as a result of the step (C) being included in the method for producing a nonwoven fabric according to the present embodiment, the tensile elongation at break of the nonwoven fabric in the CD direction and the tensile elongation at break of the nonwoven fabric in the MD direction can be increased.

Still further, as a result of the step (C) being included in the method for producing a nonwoven fabric according to the present embodiment, the fibers in the nonwoven fabric are partly fused to each other, and consequently, fluffing of the nonwoven fabric can be readily suppressed.

The range of the heating temperature in the step (C) is preferably from 80°C to 135°C.

In the step (C), within the preferable heating temperature range, the heating is performed for a heating time that is preferably from 2 to 300 minutes, more preferably from 5 to 100 minutes, or even more preferably 10 to 50 minutes.

In the step (C), by heating the first nonwoven fabric for two minutes or more within the preferable heating temperature range, the tensile elongation at break of the nonwoven fabric in the CD direction and the tensile elongation at break of the nonwoven fabric in the MD direction can be further increased.

Also, in the step (C), by heating the first nonwoven fabric within the preferable heating temperature range for 300 minutes or less, the productivity of the second nonwoven fabric is increased.

In the step (C), the first nonwoven fabric may be heated by a gas having a temperature within the preferable heating temperature range.

The gas is, for example, air or inert gas (e.g., nitrogen gas).

The first nonwoven fabric is heated by the gas having a temperature within the preferable heating temperature range, for example, in the following manner: heating the first nonwoven fabric in a heating furnace by the gas having a temperature within the preferable heating temperature range; and/or heating the first nonwoven fabric by blowing the gas having a temperature within the preferable heating temperature range onto the first nonwoven fabric.

In the step (C), the first nonwoven fabric may be heated within the preferable heating temperature range by sandwiching the first nonwoven fabric between a pair of heating rolls.

In the step (C), it is preferable to heat the first nonwoven fabric within the preferable heating temperature range in a non-contact manner.

In the step (C), in the case of heating the first nonwoven fabric by sandwiching the first nonwoven fabric between a pair of heating rolls, there is a concern that the first nonwoven fabric may get fused to the heating rolls.

In the step (C), by heating the first nonwoven fabric within the preferable heating temperature range in a manner not to bring the first nonwoven fabric into contact with the heating rolls or the like, the first nonwoven fabric can be suppressed from being fused to the heating rolls or the like, which is advantageous.

The way to heat the first nonwoven fabric within the preferable heating temperature range in a non-contact manner is, for example, to heat the first nonwoven fabric by a gas having a temperature within the preferable heating temperature range.

In the step (C), the first nonwoven fabric may be heated in a state where the first nonwoven fabric has been wound into a roll.

Alternatively, in the step (C), instead of winding the first nonwoven fabric into a roll, the first nonwoven fabric may be made into a sheet shape, and the sheet-shaped first nonwoven fabric may be heated. For example, the first nonwoven fabric in an elongated shape may be heated continuously while being transported.

In the step (C), by cooling the heated first nonwoven fabric, the second nonwoven fabric is obtained.

The way to cool the heated first nonwoven fabric may be, for example, to naturally cool the heated first nonwoven fabric at normal temperature and normal pressure, or to forcibly cool the heated first nonwoven fabric by blowing a gas (e.g., normal-temperature gas) onto the heated first nonwoven fabric.

It should be noted that, in the above-described method for producing a nonwoven fabric, the nonwoven fabric may be produced by a spun-bond technique, a flash spinning technique, or an electrospinning technique.

In the method for producing a nonwoven fabric, preferably, the nonwoven fabric is produced by a melt-blown technique or a spun-bond technique.

In the spun-bond technique, the molten product is obtained by heat-melting the first raw material composition, and the raw filaments are obtained by discharging the molten product through the nozzle holes.

Next, gas having a normal temperature is blown onto the raw filaments to draw the raw filaments.

In the spun-bond technique, by increasing the flow rate of the gas blown onto the raw filaments, the ratio of the opening area of each nozzle hole to the cross-sectional area of each fiber can be increased. Also by reducing the amount of the molten product discharged through each nozzle hole per unit time, the ratio of the opening area of each nozzle hole to the cross-sectional area of each fiber can be increased.

It should be noted that, in the spun-bond technique, the raw filaments may be drawn by using a drawing roll. In this case, by increasing the rotation speed of the drawing roll, the ratio of the opening area of each nozzle hole to the cross-sectional area of each fiber can be increased. Also by reducing the amount of the molten product discharged through each nozzle hole per unit time, the ratio of the opening area of each nozzle hole to the cross-sectional area of each fiber can be increased.

In the flash spinning technique, the molten product is obtained under the condition of high-temperature and high-pressure by mixing the materials of the first raw material composition and a solvent under the condition of high-temperature and high-pressure.

Next, the molten product obtained under the condition of high-temperature and high-pressure is discharged through the nozzle holes under the condition of normal temperature and normal pressure, and thereby the raw filaments are obtained and the obtained raw filaments are subjected to drawing.

The solvent is, for example, an alcohol (e.g., methanol or ethanol) or acetone.

It should be noted that, in the flash spinning technique, by increasing the pressure applied to the molten product, the ratio of the opening area of each nozzle hole to the cross-sectional area of each fiber can be increased. Also by reducing the amount of the molten product discharged through each nozzle hole per unit time, the ratio of the opening area of each nozzle hole to the cross-sectional area of each fiber can be increased.

In the electrospinning technique, the first raw material composition that is in a state where a high voltage is applied thereto is irradiated with laser light, and thereby the first raw material composition is heat-melted. Consequently, the molten product can be obtained.

Next, the molten product is discharged through the nozzle holes, and thereby raw filaments are obtained.

Then, the raw filaments are drawn by electrostatic force.

It should be noted that, in the electrospinning technique, by increasing the electrostatic force, the ratio of the opening area of each nozzle hole to the cross-sectional area of each fiber can be increased. Also by reducing the amount of the molten product discharged through each nozzle hole per unit time, the ratio of the opening area of each nozzle hole to the cross-sectional area of each fiber can be increased.

### <Method for Producing Heat-Fused Article According to First Embodiment>

A method for producing a heat-fused article according to the first embodiment is a method that includes heat-fusing the nonwoven fabric according to the present embodiment and a nonwoven fabric including cellulosic fibers to each other to obtain the heat-fused article.

### <Method for Producing Heat-Fused Article According to Second Embodiment>

A method for producing a heat-fused article according to the second embodiment is a method that includes heat-fusing a nonwoven fabric and a molded article to each other to obtain the heat-fused article, the nonwoven fabric including fibers.

The fibers are formed from the first resin composition containing the poly(3-hydroxyalkanoate) resin.

The molded article is formed from the second resin composition containing the poly(3-hydroxyalkanoate) resin.

The value obtained by subtracting the enthalpy of fusion of the endothermic peak in the DSC curve of the molded article from the enthalpy of fusion of the endothermic peak in the DSC curve of the nonwoven fabric is 2.5 J/g or greater.

The nonwoven fabric is the nonwoven fabric according to the present embodiment.

In the method for producing a heat-fused article according to the second embodiment, the heat-fusing can be performed by irradiating the portions that are to be heat-fused to each other with ultrasonic waves.

The heating temperature in the heat-fusing is preferably from (the melting point of the molded article + 5)°C to (the thermal decomposition temperature of the molded article - 5)°C.

As a result of the heating temperature in the heat-fusing being (the melting point of the molded article + 5)°C or higher, the nonwoven fabric and the molded article tend to be more sufficiently heat-fused to each other.

As a result of the heating temperature in the heat-fusing being (the thermal decomposition temperature of the molded article - 5)°C or lower, thermal decomposition of the molded article is less likely to occur.

The thermal decomposition temperature of the molded article is an onset temperature that is determined in accordance with a method described in JIS K 71201-1987 "Testing Methods of Plastics by Thermogravimetry".

It should be noted that, in a case where multiple-stage mass reduction has occurred, the primary onset temperature is determined as the thermal decomposition temperature of the molded article.

### (Method for Producing Molded Article)

In a method for producing a molded article herein, the molded article can be produced by: melt-kneading the materials of the second raw material composition to obtain pellets as necessary; and then subjecting the pellets to known injection molding. Hereinafter, a specific description is given.

In the method for producing a molded article, first, the materials of the second raw material composition are melt-kneaded by using an extruder, a kneader, a Banbury mixer, rolls, or the like to obtain a melt-kneaded product.

Next, the melt-kneaded product is extruded as a strand and then cut to obtain granular (e.g., cylindrical, elliptic cylindrical, spherical, cubic, or rectangular parallelepiped) pellets.

It should be noted that, desirably, the pellets thus fabricated are sufficiently dried at a temperature from 40 to 80°C to remove water therefrom and then subjected to the injection molding.

The temperature at which to perform the melt-kneading depends on the melting point, melt viscosity, etc. of the resin that is used, and therefore cannot be defined in a single way unconditionally. However, the resin temperature of the molten kneaded product at a die outlet is preferably from 140 to 190°C, more preferably from 145 to 185°C, or even more preferably from 150 to 180°C. As a result of the resin temperature of the molten kneaded product being 140°C or higher, the polymer component including the poly(3-hydroxyalkanoate) resin can be melted sufficiently. Also, as a result of the resin temperature of the molten kneaded product being 190°C or lower, thermal decomposition of the polymer component including the poly(3-hydroxyalkanoate) resin can be suppressed.

Next, the fabricated pellets are subjected to the injection molding, and thereby the molded article can be obtained. Injection molding is a technique to obtain the molded article in the following manner: injecting the heat-melted second raw material composition into a mold; cooling and solidifying the second raw material composition in the mold; and then opening the mold to remove a molded article from the mold, thus obtaining the molded article. Examples of an injection molding technique adoptable herein includes an injection molding technique commonly used to mold a thermoplastic resin, gas-assisted molding, injection compression molding, and injection blow molding (including one-step process and two-step process). As other examples, in-mold forming, gas press molding, two-color molding, sandwich molding, PUSH-PULL, SCORIM, etc., are also adoptable. However, injection molding techniques adoptable herein are not limited to these examples.

The temperature at which the cooling in the mold is performed after the injection into the mold is, for example, preferably from 20 to 70°C, more preferably from 25 to 60°C, even more preferably from 30 to 50°C, or particularly preferably from 35 to 45°C.

### [Disclosure Items]

The following items each disclose a preferred embodiment.

### [Item 1]

A nonwoven fabric including fibers, wherein: the fibers are formed from a resin composition containing a poly(3-hydroxyalkanoate) resin; the poly(3-hydroxyalkanoate) resin includes a 3-hydroxybutyrate unit; a content ratio of the 3-hydroxybutyrate unit in the poly(3-hydroxyalkanoate) resin included in the nonwoven fabric is from 91.0% by mole to 97.0% by mole; and an enthalpy of fusion of an endothermic peak in a DSC curve of the nonwoven fabric is 50.0 J/g or greater.

### [Item 2]

The nonwoven fabric according to item 1, wherein the nonwoven fabric is a melt-blown nonwoven fabric.

### [Item 3]

The melt-blown nonwoven fabric according to item 1 or 2, wherein an average value of fiber diameters of the fibers is 3.3 µm or greater.

### [Item 4]

The nonwoven fabric according to any one of items 1 to 3, wherein: a maximum load on the nonwoven fabric in a MD direction is 0.7 N or greater; and a maximum load on the nonwoven fabric in a CD direction is 0.7 N or greater.

### [Item 5]

A heat-fused article including: the nonwoven fabric according to any one of items 1 to 4; and a nonwoven fabric including cellulosic fibers, wherein the nonwoven fabric according to any one of items 1 to 4 and the nonwoven fabric including the cellulosic fibers are heat-fused to each other.

### [Item 6]

A coffee filter formed from the heat-fused article according to item 5.

### [Item 7]

A heat-fused article including a nonwoven fabric and a molded article that are heat-fused to each other, the nonwoven fabric including fibers, wherein: the fibers are formed from a first resin composition containing a poly(3-hydroxyalkanoate) resin; the molded article is formed from a second resin composition containing a poly(3-hydroxyalkanoate) resin; a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and the nonwoven fabric is the nonwoven fabric according to any one of items 1 to 4.

### [Item 8]

The heat-fused article according to item 7, wherein the poly(3-hydroxyalkanoate) resin contained in the second resin composition includes a 3-hydroxybutyrate unit.

### [Item 9]

The heat-fused article according to item 8, wherein a content ratio of the 3-hydroxybutyrate unit in the poly(3-hydroxyalkanoate) resin contained in the second resin composition is from 91.0% by mole to 97.0% by mole.

### [Item 10]

The heat-fused article according to any one of items 7 to 9, wherein: the heat-fused article is a container including a container body with an opening and including a cover that seals the opening; the container body is the molded article; the cover includes the nonwoven fabric; and the nonwoven fabric and the molded article are heat-fused to each other at the opening.

### [Item 11]

A coffee capsule including the heat-fused article according to item 10, wherein: the container body includes an interior space; and the interior space accommodates ground coffee therein.

### [Item 12]

A method for producing a heat-fused article, the method including heat-fusing a nonwoven fabric and a molded article to each other to obtain the heat-fused article, the nonwoven fabric including fibers, wherein: the fibers are formed from a first resin composition containing a poly(3-hydroxyalkanoate) resin; the molded article is formed from a second resin composition containing a poly(3-hydroxyalkanoate) resin; a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and the nonwoven fabric is the nonwoven fabric according to any one of items 1 to 4.

### [Item 13]

The method for producing a heat-fused article according to item 12, wherein a heating temperature in the heat-fusing is from (a melting point of the molded article + 5)°C to (a thermal decomposition temperature of the molded article - 5)°C.

### [Item 14]

A method for producing a melt-blown nonwoven fabric including fibers by using a nozzle including a nozzle hole, the method including the steps of: (A) obtaining a raw filament by discharging a molten product through the nozzle hole; and (B) drawing the raw filament by blowing a gas onto the raw filament, wherein: the molten product contains a poly(3-hydroxyalkanoate) resin; the poly(3-hydroxyalkanoate) resin includes a 3-hydroxybutyrate unit; a content ratio of the 3-hydroxybutyrate unit in the poly(3-hydroxyalkanoate) resin contained in the molten product is from 91.0% by mole to 97.0% by mole; and in the step (B), a flow rate of the gas blown onto the raw filament is 900 NL/min/600mm or greater.

### [Item 15]

The method for producing a melt-blown nonwoven fabric according to item 14, wherein a ratio of an opening area of the nozzle hole to a cross-sectional area of each fiber is 900 or greater.

It should be noted that the present invention is not limited to the above-described embodiments. Also, the present invention is not limited by the above-described functional advantages. Further, various modifications can be made to the present invention without departing from the scope of the present invention.

### Examples

Next, the present invention is described more specifically with Examples and Comparative Example. It should be noted that the present invention is not limited by these Examples in any way.

The materials listed below were prepared.

### (Poly(3-Hydroxyalkanoate) Resin (P3HA))

P3HAs listed below were fabricated in accordance with a method described in Example 1 of WO 2019/142845.
P3HA-1: P3HB3HH (with a content ratio of a 3-hydroxybutyrate unit of 94.5% by mole and a content ratio of a 3-hydroxyhexanoate (3HH) unit of 5.5% by mole)

Also, PHA-F shown in Table 1 of WO 2022/065181 was prepared.

P3HA-2: P3HB3HH (with a content ratio of a 3-hydroxybutyrate unit of 94.0% by mole and a content ratio of a 3-hydroxyhexanoate (3HH) unit of 6.0% by mole)

It should be noted that the content ratio of the 3-hydroxybutyrate unit and the content ratio of the 3-hydroxyhexanoate (3HH) unit in each P3HA were determined in a manner described below.

First, 2 mL of a mixed solution of sulfuric acid and methanol (the volume of sulfuric acid : the volume of methanol = 15 : 85) and 2 mL of chloroform were added to 20 mg of the P3HA in a dry state. The resulting sample was placed in a container, and the container was sealed. The sample in the sealed container was heated at 100°C for 140 minutes, and thereby a first reaction solution was obtained, the first reaction solution including a methyl ester that was a P3HA degradation product.

Then, the first reaction solution was cooled, and 1.5 g of sodium hydrogen carbonate was added to the cooled first reaction solution little by little for neutralization. The resulting mixture was left stand until generation of carbon dioxide stopped. In this manner, a second reaction solution was obtained.

Further, 4 mL of diisopropyl ether was added to and mixed well with the second reaction solution, and thereby a mixture was obtained.

Next, the mixture was subjected to centrifugal separation, and thereby a supernatant solution was obtained.

Then, the monomer unit composition of the aforementioned degradation product in the supernatant solution was analyzed by capillary gas chromatography under the conditions indicated below, and thereby the content ratio of the 3-hydroxybutyrate unit and the content ratio of the 3-hydroxyhexanoate (3HH) unit in the P3HA were determined.
Gas chromatograph: GC-17A available from Shimadzu Corporation
Capillary column: NEUTRA BOND-1 (with a column length of 25 m, a column inner diameter of 0.25 mm, and a liquid film thickness of 0.4 µm) available from GL Sciences Inc.
Carrier gas: He
Column inlet pressure: 100 kPa
Sample amount: 1 µL

As the temperature condition, the temperature was raised from 100 to 200°C at a rate of 8 °C/min, and then raised from 200 to 290°C at a rate of 30 °C/min.

### (Lubricant)

BA: Behenic acid amide (BNT-22H available from Nippon Fine Chemical Co., Ltd.)

EA: Erucic acid amide (NEUTRON-S available from Nippon Fine Chemical Co., Ltd.)

### (Crystal Nucleating Agent)

PETL: Pentaerythritol (Neulizer P available from Taiseikayaku Co., Ltd.)

### (First Raw Material Composition)

The above materials were melt-kneaded at a blending ratio shown in Table 1 below, and thereby the first raw material composition was obtained.

It should be noted that, by utilizing shear heat generation due to the melt-kneading, the weight-average molecular weight (Mw) of the first raw material composition and the melt mass-flow rate (MFR) of the first raw material composition at 165°C were adjusted.

### (Measurement of Physical Properties of First Raw Material Composition)

The weight-average molecular weight (Mw) of the first raw material composition and the melt mass-flow rate (MFR) of the first raw material composition at 165°C were measured.

The measurement values are shown in Table 1 below.

It should be noted that the weight-average molecular weight (Mw) of the first raw material composition was calculated by GPC measurement. Conditions for the GPC measurement are indicated below.
Measurement equipment: SHIMADZU 20A available from Shimadzu Corporation
Column: ShodexK-806M available from Showa Denko K. K.
Detector: RI detector
Reference material: polystyrene
Eluent: chloroform (HPLC grade)
Flow rate: 1 mL/min
Temperature: 40°C

**[Table 1]**

| Composition of first raw material composition | | | | Content ratio of each monomer unit in P3HA | | MFR of first raw material composition at 165°C | Weight-average molecular weight (Mw) of first raw material composition |
|---|---|---|---|---|---|---|---|
| P3HA | Lubricant | | Crystal nucleating agent | | | | |
| P3HA-1 | BA | EA | PETL | 3HH | 3-hydroxybutyrate | | |
| parts by weight | parts by weight | parts by weight | parts by weight | mol % | mol% | g/10min | - |
| 100 | 0.33 | 0.33 | 1.00 | 5.5 | 94.5 | 110 | 189040 |

### (Nonwoven Fabric of each of Examples 1 to 5 and Comparative Example 1)

By using the nonwoven fabric producing apparatus shown in FIGS. 2 to 4, each nonwoven fabric was produced from the first raw material composition by a melt-blown technique under the conditions indicated in Table 2 below. It should be noted that a nozzle having a length (width) of 600 mm in the CD direction was used in the production of each nonwoven fabric.

**[Table 2]**

| | Extruder Temperature | Gear pump | Nozzle | | | | Gas (air) blown onto fibrous molten kneaded product | | DCD | Conveyor belt |
|---|---|---|---|---|---|---|---|---|---|---|
| | Temperature | Rotation speed | Nozzle hole opening diameter | Number of Nozzle holes | Space between nozzle holes | Temperature | Temperature | Flow rate | | Moving speed |
| | °C | rpm | mm | Number of holes | mm | °C | °C | NL/min/600mm | mm | m/min |
| Example. 1 | 178 | 15 | 0.25 | 1207 | 0.20 | 186 | 168 | 6000 | 225 | 2.0 |
| Example. 2 | 178 | 20 | 0.25 | 1207 | 0.20 | 186 | 168 | 4950 | 225 | 2.5 |
| Example. 3 | 178 | 15 | 0.25 | 1207 | 0.20 | 186 | 168 | 2000 | 225 | 2.0 |
| Example. 4 | 178 | 15 | 0.25 | 1207 | 0.20 | 186 | 168 | 1200 | 225 | 2.0 |
| Example. 5 | 178 | 15 | 0.25 | 1207 | 0.20 | 186 | 168 | 900 | 225 | 2.0 |
| Comparative. Example.1 | 178 | 15 | 0.25 | 1207 | 0.20 | 186 | 168 | 600 | 225 | 2.0 |

### (Measurement of Physical Properties of Nonwoven Fabric)

For each nonwoven fabric, the areal weight, the thickness, the average value of the fiber diameters of the fibers, the coefficient of variation of the fiber diameters of the fibers, the enthalpy of fusion of the endothermic peak in the DSC curve, and the weight-average molecular weight of the first resin composition were measured in the above-described manner.

The measurement values are shown in Table 3 below.

It should be noted that the average value of the fiber diameters of the fibers and the coefficient of variation of the fiber diameters of the fibers were determined by using a benchtop scanning electron microscope JCM-6000 available from JEOL LTD.

The conditions for the GPC measurement of the weight-average molecular weight of the first resin composition were the same as the conditions for the GPC measurement of the weight-average molecular weight (Mw) of the first raw material composition.

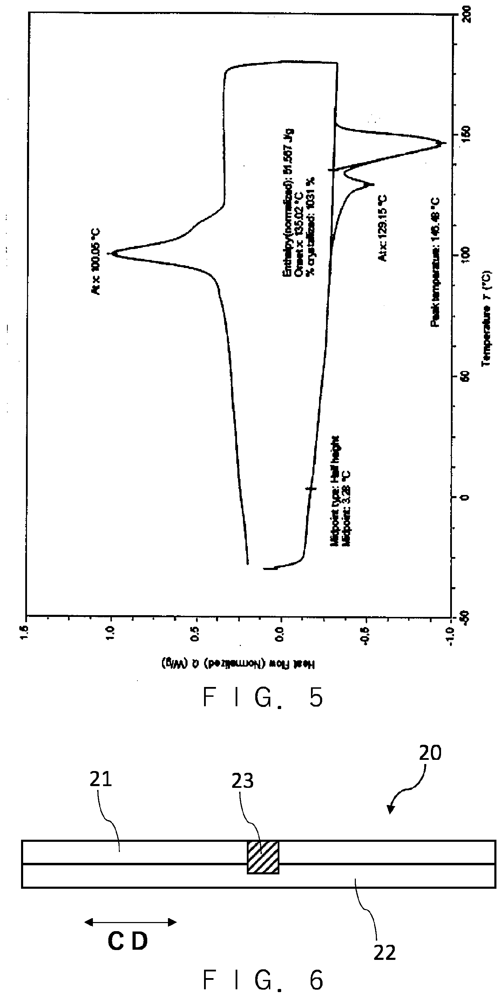

FIG. 5 shows the DSC curve of the nonwoven fabric of Example 2.

### (Maximum Load, Tensile Elongation at Maximum Load, and Tensile Elongation at Break of Nonwoven Fabric in CD direction and Those in MD direction)

For each nonwoven fabric, the maximum load, the tensile elongation at maximum load, and the tensile elongation at break in the CD direction and those in the MD direction were measured.

It should be noted that the maximum load, the tensile elongation at maximum load, and the tensile elongation at break in the CD direction and those in the MD direction were measured by using a constant rate extension type tension testing machine that accords with JIS B7721:2018 "Tension/compression testing machines - Calibration and verification of the forcemeasuring system".

As the constant rate extension type tension testing machine, a universal tester (RTG-1210 available from A&D Company, Limited) or the like was used.

First, a test piece (width: 8 mm, length: 40 mm) was cut out from the nonwoven fabric.

Next, the test piece with an initial load applied thereto was attached to the tension testing machine, i.e., gripped by grips of the tension testing machine, with the length of the test piece between the grips being 20 mm. In other words, at the time when the initial load was applied to the test piece, the length of the test piece between the grips was 20 mm. Here, the initial load was applied to the test piece by pulling the test piece by hand to such an extent that sagging did not occur.

Then, a load was applied to the test piece at a tensile speed of 20 mm/min until the test piece broke, and the maximum load on the test piece in the CD direction and that in the MD direction were measured.

Further, the tensile elongation at maximum load and the tensile elongation at break of the test piece in the CD direction and those in the MD direction were determined by using an equation shown below. Tensile elongation at maximum load (%) = [(the length of the test piece between the grips at maximum load - the length of the test piece between the grips at initial load) / the length of the test piece between the grips at initial load] × 100 (%) Tensile elongation at break (%) = [(the length of the test piece between the grips at break - the length of the test piece between the grips at initial load) / the length of the test piece between the grips at initial load] × 100 (%)

The measurement values are shown in Table 3 below.

### (Opening Area of Nozzle Hole / Cross-Sectional Area of Fiber)

The opening area of each nozzle hole / the cross-sectional area of each fiber was calculated in the above-described manner.

**[Table 3]**

| | Nonwoven Fabric | | | | | | | | | | | Nozzle hole opening area / fiber cross-sectional area | Weight-average molecular weight (Mw) of first raw material composition |
|---|---|---|---|---|---|---|---|---|---|---|---|---|---|
| | Areal weight | Thickness | Fiber diameter | | Enthalpy of fusion | Maximum load | | Tensile elongation at maximum load | | Tensile elongation at break | | | |
| | | | Average value | Coefficient of variation | | CD | MD | CD | MD | CD | MD | | |
| | g/m² | mm | µm | - | J/g | N | N | % | % | % | % | - | - |
| EX. 1 | 42 | 0.23 | 3.5 | 0.29 | 51.2 | 0.9 | 1.9 | 19 | 11 | 27 | 55 | 5016 | 132477 |
| EX. 2 | 45 | 0.22 | 4.3 | 0.26 | 51.6 | 1.8 | 3.0 | 17 | 8 | 21 | 16 | 3428 | - |
| EX. 3 | 42 | 0.24 | 5.9 | 0.17 | 51.2 | 1.5 | 2.6 | 12 | 4 | 63 | 121 | 1783 | 145622 |
| EX. 4 | 41 | 0.25 | 7.4 | 0.15 | 51.1 | 1.1 | 2.6 | 8 | 4 | 47 | 84 | 1157 | 133908 |
| EX. 5 | 44 | 0.29 | 8.1 | 0.16 | 52.0 | 1.0 | 2.5 | 9 | 3 | 32 | 87 | 953 | 145119 |
| Comp. Ex. 1 | 50 | 0.38 | 16.2 | 0.18 | 49.8 | 0.3 | 0.6 | 3 | 1 | 8 | 14 | 239 | 134391 |

A nonwoven fabric including cellulosic fibers (specifically, rayon fibers) shown in Table 4 below was prepared.

It should be noted that physical property values shown in Table 4 below and the aforementioned physical property values of the nonwoven fabric were measured in the same manner.

**[Table 4]**

| Nonwoven fabric including cellulosic fibers | | | | | | | |
|---|---|---|---|---|---|---|---|
| Areal weight | Thickness | Maximum load | | Tensile elongation at maximum load | | Tensile elongation at break | |
| | | CD | MD | CD | MD | CD | MD |
| g/m² | mm | N | N | % | % | % | % |
| 25 | 0.16 | 1.0 | 2.6 | 16 | 5 | 28 | 15 |

### (Evaluation Test (CD direction))

A first test piece (width: 8 mm, length: 40 mm) was cut out from the nonwoven fabric, such that the length direction of the first test piece was the CD direction, and the width direction of the first test piece was the MD direction.

A second test piece (width: 8 mm, length: 40 mm) was cut out from the nonwoven fabric including the cellulosic fibers, such that the length direction of the second test piece was the CD direction, and the width direction of the second test piece was the MD direction.

Next, the first test piece and the second test piece were stacked together such that their contours match each other and such that the CD direction of the first test piece and the CD direction of the second test piece match each other.

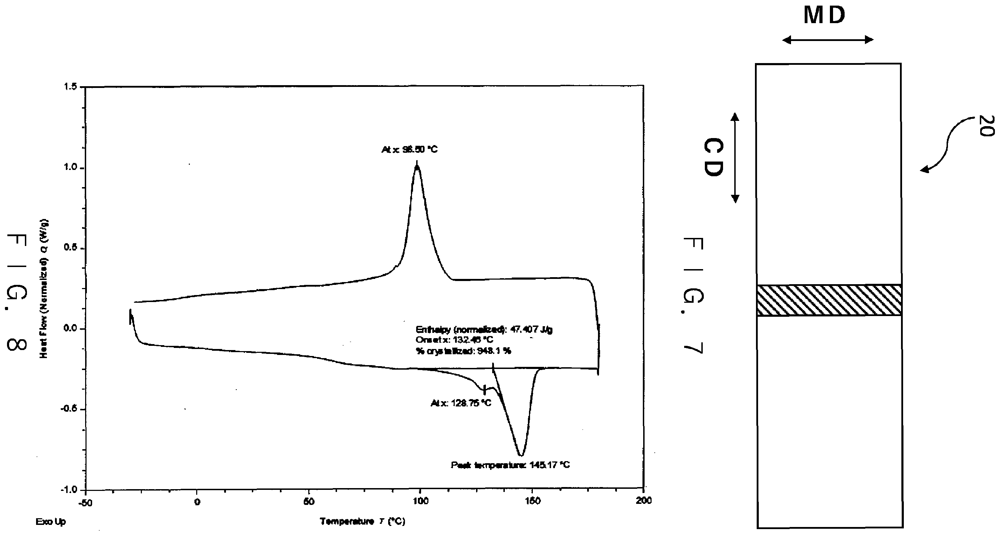

Then, as shown in FIGS. 6 and 7, the first test piece 21 and the second test piece 22 were heated at 160°C for three seconds by using a heat sealer, and thereby the first test piece 21 and the second test piece 22 were heat-fused to each other, such that a fused portion 23 linearly extending in the MD direction of the first test piece 21 was formed on the middle portion of the first test piece 21 in the CD direction. In this manner, a heat-fused article 20 was fabricated.

Next, the heat-fused article with an initial load applied thereto was attached to a tension testing machine, i.e., gripped by grips of the tension testing machine, with the length of the heat-fused article between the grips being 20 mm. On one end of the heat-fused article, only the first test piece was gripped by one of the grips, and on the other end of the heat-fused article, only the second test piece was gripped by the other grip.

Then, in the same manner as that of the measurement of the maximum load, the tensile elongation at maximum load, and the tensile elongation at break of the nonwoven fabric, the maximum load, the tensile elongation at maximum load, and the tensile elongation at break of the heat-fused article in the CD direction of the nonwoven fabric were measured.

The measurement values are shown in Table 5 below.

Table 5 below also shows breaking positions.

It should be noted that, in Table 5 below, "fused portion" means a fused portion of the nonwoven fabric, and "nonwoven fabric" means the nonwoven fabric, and "fusion interface" means a fusion interface between the melt-blown nonwoven fabric and the nonwoven fabric including the cellulosic fibers.

### (Evaluation Test (MD direction))

A first test piece (width: 8 mm, length: 40 mm) was cut out from the nonwoven fabric, such that the length direction of the first test piece was the MD direction, and the width direction of the first test piece was the CD direction.

A second test piece (width: 8 mm, length: 40 mm) was cut out from the nonwoven fabric including the cellulosic fibers, such that the length direction of the second test piece was the CD direction, and the width direction of the second test piece was the MD direction.

Next, the first test piece and the second test piece were stacked together such that their contours match each other and such that the MD direction of the first test piece and the CD direction of the second test piece match each other.

Then, the first test piece and the second test piece were heated at 160°C for three seconds by using a heat sealer, and thereby the first test piece and the second test piece were heat-fused to each other, such that a heat-fused portion linearly extending in the CD direction of the first test piece was formed on the middle portion of the first test piece in the MD direction. In this manner, a heat-fused article was fabricated.

Next, the test pieces with an initial load applied thereto were attached to a tension testing machine, i.e., gripped by grips of the tension testing machine, with the length of the test pieces between the grips being 20 mm. On one end of the heat-fused article, only the first test piece was gripped by one of the grips, and on the other end of the heat-fused article, only the second test piece was gripped by the other grip.

Then, in the same manner as that of the measurement of the maximum load, the tensile elongation at maximum load, and the tensile elongation at break of the nonwoven fabric, the maximum load, the tensile elongation at maximum load, and the tensile elongation at break of the heat-fused article in the MD direction of the nonwoven fabric were measured.

The measurement values are shown in Table 5 below.

Table 5 below also shows breaking positions.

**[Table 5]**

| | Heat-fused article | | | | | | | |
|---|---|---|---|---|---|---|---|---|
| | Maximum load | | Tensile elongation at maximum load | | Tensile elongation at break | | Breaking position | |
| | CD | MD | CD | MD | CD | MD | CD | MD |
| | N | N | % | % | % | % | - | - |
| Example 1 | 0.9 | 1.9 | 19 | 11 | 27 | 55 | Fused portion and nonwoven fabric | Fused portion |
| Example 2 | 1.8 | 3.0 | 17 | 8 | 21 | 16 | Fused portion | Fused portion |
| Example 3 | 1.5 | 2.6 | 12 | 4 | 63 | 121 | Fused portion and nonwoven fabric | Fused portion |
| Example 4 | 1.1 | 2.6 | 8 | 4 | 47 | 84 | Fused portion and nonwoven fabric | Fused portion |
| Example 5 | 1.0 | 2.5 | 9 | 3 | 32 | 87 | Fused portion and nonwoven fabric | Fused portion |
| Comp. Example 1 | 0.3 | 0.6 | 3 | 1 | 8 | 14 | Fusion interface | Fusion interface |

As shown in Table 5, in each of Examples 1 to 5, which fall within the scope of the present invention, the maximum load values were greater than those in Comparative Example 1, in which the enthalpy of fusion was 49.8 J/g.

Also, in Comparative Example 1, cracks occurred at the fusion interface, which caused breakage.

Thus, the present invention makes it possible to provide a nonwoven fabric that has excellent heat fusibility with another material, such as with a nonwoven fabric including cellulosic fibers.

### (Molded Article)

The second raw material composition in which the P3HA was the above-described P3HA-2 and which contained 98% or greater of the P3HA-2 was fabricated in the form of pellets.

Then, the second raw material composition in the form of pellets was dried at 60°C for 24 hours by using a dehumidifying dryer.

Next, from the dried second raw material composition in the form of pellets, a molded article was fabricated by injection molding. The molded article was a container body with an opening.

It should be noted that, in the injection molding, an injection molding machine Si-30V available from TOYO MACHINERY & METAL CO., LTD. was used with a barrel temperature of the injection molding machine set such that nozzle/T1/T2/T3 = 155°C/145°C/135°C/125°C, a mold temperature set to 35°C, and an injection speed set to 20 mm/sec.

Then, the enthalpy of fusion of the endothermic peak in the DSC curve of the molded article, the melting point of the molded article, and the thermal decomposition temperature of the molded article were measured in the above-described manner.

FIG. 8 shows the DSC curve of the molded article.

The enthalpy of fusion of the endothermic peak in the DSC curve of the molded article was 47.4 J/g.

The melting point of the molded article was 145°C.

The thermal decomposition temperature of the molded article was 185°C.

### (Heat-Fused Article)

Each of the nonwoven fabrics of Examples 1 to 5 and Comparative Example 1 was used as a cover, and the cover and the container body were heat-fused to each other at the opening of the container body at a temperature within a range from 150°C to 180°C by using ultrasonic waves to seal the opening with the cover. In this manner, a heat-fused article was fabricated.

For each heat-fused article, a value was obtained by subtracting the enthalpy of fusion of the endothermic peak in the DSC curve of the molded article from the enthalpy of fusion of the endothermic peak in the DSC curve of the nonwoven fabric (hereinafter, this value may be simply referred to as a "difference in enthalpy of fusion". These obtained values are shown in Table 6 below.

### (Evaluation of Heat Fusibility)

The heat fusibility of each of the heat-fused articles of Examples 1 to 5 and Comparative Example 1 was evaluated. The evaluation of the heat fusibility was made based on the tear resistance of the fusion interface when the fusion interface and the vicinity thereof was pressed with a finger. The evaluation criteria are indicated below.

Bad: The fusion interface was easily torn when the fusion interface and the vicinity thereof was pressed by a finger.

Good: The fusion interface was not easily torn when the fusion interface and the vicinity thereof was pressed by a finger, but the fusion interface was torn when the fusion interface and the vicinity thereof was pressed with relatively great force by a finger.

Excellent: The fusion interface was not torn even when the fusion interface and the vicinity thereof was pressed with relatively great force by a finger.

The evaluation results are shown in Table 6 below.

**[Table 6]**

| | Difference in enthalpy of fusion | Evaluation of heat fusibility |
|---|---|---|
| | J/g | |
| Example 1 | 3.8 | Excellent |
| Example 2 | 4.2 | Excellent |
| Example 3 | 3.8 | Good |
| Example 4 | 3.7 | Good |
| Example 5 | 4.6 | Good |
| Comparative Example 1 | 2.4 | Bad |

As shown in Table 6, in each of Examples 1 to 5, which fall within the scope of the present invention, the heat fusibility was evaluated as either Excellent or Good. On the other hand, in Comparative Example 1, the heat fusibility was evaluated as Bad.

Thus, the present invention makes it possible to provide a nonwoven fabric that has excellent heat fusibility with another material, such as with a molded article including a poly(3-hydroxyalkanoate) resin.

### Reference Signs List

1: nonwoven fabric producing apparatus, 2: hopper, 3: extruder, 4: gear pump, 5: filter, 6: kneader, 7: nozzle, 7a: nozzle hole, 8: collector, 8a: conveyor belt, 8b: roller, 9: winder,
10: container, 11: container body, 11a: opening, 11b: interior space, 11c: bottom wall, 11d: side wall, 12: cover, 13: ground coffee,
20: heat-fused article, 21: first test piece, 22: second test piece, 23: fused portion,
A: kneaded product, B: first nonwoven fabric, C: gas

## Claims

1. A nonwoven fabric comprising fibers, wherein:
the fibers are formed from a resin composition containing a poly(3-hydroxyalkanoate) resin;
the poly(3-hydroxyalkanoate) resin includes a 3-hydroxybutyrate unit;
a content ratio of the 3-hydroxybutyrate unit in the poly(3-hydroxyalkanoate) resin included in the nonwoven fabric is from 91.0% by mole to 97.0% by mole; and
an enthalpy of fusion of an endothermic peak in a DSC curve of the nonwoven fabric is 50.0 J/g or greater.

2. The nonwoven fabric according to claim 1, wherein the nonwoven fabric is a melt-blown nonwoven fabric.

3. The nonwoven fabric according to claim 1 or 2, wherein an average value of fiber diameters of the fibers is 3.3 µm or greater.

4. The nonwoven fabric according to claim 1 or 2, wherein:
a maximum load on the nonwoven fabric in a MD direction is 0.7 N or greater; and
a maximum load on the nonwoven fabric in a CD direction is 0.7 N or greater.

5. A heat-fused article comprising:
the nonwoven fabric according to claim 1 or 2; and
a nonwoven fabric including cellulosic fibers, wherein
the nonwoven fabric according to claim 1 or 2 and the nonwoven fabric including the cellulosic fibers are heat-fused to each other.

6. A coffee filter formed from the heat-fused article according to claim 5.

7. A heat-fused article comprising a nonwoven fabric and a molded article that are heat-fused to each other, the nonwoven fabric including fibers, wherein:
the fibers are formed from a first resin composition containing a poly(3-hydroxyalkanoate) resin;
the molded article is formed from a second resin composition containing a poly(3-hydroxyalkanoate) resin;
a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and
the nonwoven fabric is the nonwoven fabric according to claim 1 or 2.

8. The heat-fused article according to claim 7, wherein the poly(3-hydroxyalkanoate) resin contained in the second resin composition includes a 3-hydroxybutyrate unit.

9. The heat-fused article according to claim 8, wherein a content ratio of the 3-hydroxybutyrate unit in the poly(3-hydroxyalkanoate) resin contained in the second resin composition is from 91.0% by mole to 97.0% by mole.

10. The heat-fused article according to claim 7, wherein:
the heat-fused article is a container including a container body with an opening and including a cover that seals the opening;
the container body is the molded article;
the cover includes the nonwoven fabric; and
the nonwoven fabric and the molded article are heat-fused to each other at the opening.

11. A coffee capsule comprising the heat-fused article according to claim 10, wherein:
the container body includes an interior space; and
the interior space accommodates ground coffee therein.

12. A method for producing a heat-fused article, the method comprising heat-fusing a nonwoven fabric and a molded article to each other to obtain the heat-fused article, the nonwoven fabric including fibers, wherein:
the fibers are formed from a first resin composition containing a poly(3-hydroxyalkanoate) resin;
the molded article is formed from a second resin composition containing a poly(3-hydroxyalkanoate) resin;
a value obtained by subtracting an enthalpy of fusion of an endothermic peak in a DSC curve of the molded article from an enthalpy of fusion of an endothermic peak in a DSC curve of the nonwoven fabric is 2.5 J/g or greater; and
the nonwoven fabric is the nonwoven fabric according to claim 1 or 2.

13. The method for producing a heat-fused article according to claim 12, wherein a heating temperature in the heat-fusing is from (a melting point of the molded article + 5)°C to (a thermal decomposition temperature of the molded article - 5)°C.

14. A method for producing a melt-blown nonwoven fabric including fibers by using a nozzle including a nozzle hole, the method comprising the steps of:
(A) obtaining a raw filament by discharging a molten product through the nozzle hole; and
(B) drawing the raw filament by blowing a gas onto the raw filament, wherein:
the molten product contains a poly(3-hydroxyalkanoate) resin;
the poly(3-hydroxyalkanoate) resin includes a 3-hydroxybutyrate unit;
a content ratio of the 3-hydroxybutyrate unit in the poly(3-hydroxyalkanoate) resin contained in the molten product is from 91.0% by mole to 97.0% by mole; and
in the step (B), a flow rate of the gas blown onto the raw filament is 900 NL/min/600mm or greater.

15. The method for producing a melt-blown nonwoven fabric according to claim 14, wherein a ratio of an opening area of the nozzle hole to a cross-sectional area of each fiber is 900 or greater.
